# EUROPEAN PATENT APPLICATION

(11) **EP 4 625 207 A1**
(43) Date of publication of application: **01.10.2025**
(21) Application number: 24167946.3
(22) Date of filing: 30.03.2024
(51) Int. Cl.: G06F 16/95, G06F 8/60, G06F 8/77, G06F 16/957, G06N 20/00

(54) **SYSTEM AND METHOD FOR MANAGING UPDATES TO WEBPAGES**

(30) Priority: 29.03.2024 US 202418622141
(71) Applicant: Infosys Limited, 560-100 Bangalore (IN)
(72) Inventor: WESTON-LEWIS, Sebastian, London, UB9 5FN (GB); GUPTA, Himanshu, 134109 Panchkula (IN)
(74) Representative: Finnegan Europe LLP

(57) **Abstract**

A method for managing updates includes receiving a first set of elements indicative of a first set of updates to be made to a first webpage that is currently deployed. Prior to deployment of the updated first webpage, a first impact score indicative of an impact of the first set of updates on a set of performance metrics associated with the first webpage is predicted. A first deployment strategy is selected from a plurality of pre-defined deployment strategies based on the predicted first impact score and a set of rules. The first deployment strategy is executed for updating and deployment of the first webpage based on the first set of updates.

## Description

### FIELD OF THE DISCLOSURE

Various embodiments of the present disclosure relate generally to webpages. More specifically, various embodiments of the present disclosure relate to managing updates to webpages.

### BACKGROUND

One of the major revenue channels for businesses these days are websites. A website not only enables businesses to share credible information with the customers but also helps in business expansion. Therefore, optimal performance of webpages is of utmost importance to the businesses. Website owners may update webpages at regular intervals based on user feedback, business strategy etc., with an intention to improve performance of the webpages. Changes may be made to code structure, size of files, caching settings, content delivery network (CDN) configurations, and the like. Some changes may be made to increase the engagement of the users on the webpage. This may also have an impact on business such as improved sales, increased number of customers etc. Currently, there is no way to evaluate the business consequence or performance consequence of changes proposed to a webpage before deploying the proposed changes to a webpage.

In light of the foregoing, there exists a need for a technical and reliable solution that overcomes the abovementioned problems.

Limitations and disadvantages of conventional and traditional approaches will become apparent to one of skill in the art, through the comparison of described systems with some aspects of the present disclosure, as set forth in the remainder of the present disclosure and with reference to the drawings.

### SUMMARY

In an embodiment of the present disclosure, a method for managing updates to webpages is provided. The method includes receiving a first set of elements indicative of a first set of updates to be made to a first webpage that is currently deployed. The first set of elements include at least one of program code and content for updating the first webpage. A first impact score is predicted based on the first set of elements and using a first ML model. The first impact score is indicative of an impact of the first set of updates on a set of performance metrics associated with the first webpage. The first impact score is predicted prior to deployment of the updated first webpage. A first deployment strategy is selected from a plurality of pre-defined deployment strategies based on the predicted first impact score and a set of rules. The first deployment strategy is executed for the updating and the deployment of the first webpage based on the first set of updates. The first set of elements include at least one of program code and content for updating the first webpage.

In another embodiment of the present disclosure, a system for managing updates to webpages is provided. The system includes a processor and a memory. The memory stores instructions executable by the processor. The processor, on execution of the instructions, is configured to receive a first set of elements indicative of a first set of updates to be made to a first webpage that is currently deployed. The processor is configured to predict, based on the first set of elements and using a first ML model, a first impact score indicative of an impact of the first set of updates on a set of performance metrics associated with the first webpage. The first impact score is predicted prior to deployment of the updated first webpage. The processor is configured to select a first deployment strategy from a plurality of pre-defined deployment strategies based on the predicted first impact score and a set of rules. The first deployment strategy is executed for the updating and deployment of the first webpage based on the first set of updates.

In an embodiment of the present disclosure, a non-transitory computer readable medium is provided. Computer executable instructions, stored in the non-transitory computer readable medium, when executed by a computer, cause the computer to execute one or more operations. The operations include receiving a first set of elements indicative of a first set of updates to be made to a first webpage that is currently deployed. The first set of elements include at least one of program code and content for updating the first webpage. A first impact score is predicted based on the first set of elements and using a first ML model. The first impact score is indicative of an impact of the first set of updates on a set of performance metrics associated with the first webpage. The first impact score is predicted prior to deployment of the updated first webpage. A first deployment strategy is selected from a plurality of pre-defined deployment strategies based on the predicted first impact score and a set of rules. The first deployment strategy is executed for the updating and the deployment of the first webpage based on the first set of updates. The first set of elements include at least one of program code and content for updating the first webpage.

These and other features and advantages of the present disclosure may be appreciated from a review of the following detailed description of the present disclosure, along with the accompanying figures in which like reference numerals refer to like parts throughout.

### BRIEF DESCRIPTION OF THE DRAWINGS

Embodiments of the present disclosure are illustrated by way of example and are not limited by the accompanying figures. Similar references in the figures may indicate similar elements. Elements in the figures are illustrated for simplicity and clarity and have not necessarily been drawn to scale.
FIG. 1 is a block diagram that illustrates a system environment for managing updates to webpages, in accordance with an exemplary embodiment of the present disclosure;
FIG. 2 is a diagram that illustrates a process flow for managing updates to webpage in a server of FIG. 1, in accordance with an embodiment of the present disclosure;
FIG. 3 is a diagram that illustrates the flow in a CI/CD pipeline, in accordance with an embodiment of the present disclosure;
FIG. 4A is a diagram that illustrates an exemplary scenario for training an ML model for managing updates of webpages, in accordance with various embodiments of the present disclosure;
FIG. 4B is a diagram that illustrates an exemplary scenario for managing updated to webpages using the trained ML model, in accordance with various embodiments of the present disclosure;
FIG. 5 represents a flow chart that illustrates a method for managing updates to a webpage based on predicting impact on performance of the webpage, in accordance with an exemplary embodiment of the present disclosure;
FIG. 6 represents a flow chart that illustrates a method for predicting an impact score for managing updates to a webpage, in accordance with an exemplary embodiment of the present disclosure;
FIG. 7 represents a flow chart that illustrates a method for managing second set of updates to a webpage updated with first set of updates, in accordance with an exemplary embodiment of the present disclosure;
FIG. 8 represents a flow chart that illustrates a method for managing updates to a webpage based on predicting impact on performance and conversion associated with the webpage, in accordance with an exemplary embodiment of the present disclosure;
FIG. 9 represents a flow chart that illustrates a method for training an ML model for managing updates to a webpage, in accordance with an exemplary embodiment of the present disclosure;
FIG. 10 represents a block diagram that illustrates a system architecture of a computer system for managing updated to a webpage, in accordance with an exemplary embodiment of the present disclosure; and
FIGS. 11A-11B, collectively represents an exemplary scenario that illustrates user interface (UI) screens showing updated and non-updated versions of a webpage, in accordance with an embodiment of the present disclosure.

### DETAILED DESCRIPTION

The detailed description of the appended drawings is intended as a description of the embodiments of the present disclosure and is not intended to represent the only form in which the present disclosure may be practiced. It is to be understood that the same or equivalent functions may be accomplished by different embodiments that are intended to be encompassed within the spirit and scope of the present disclosure.

### Term Description (in addition to plain and dictionary meaning)

A webpage is a document on the Web that is accessed by way of a web browser installed on a user device associated with a user. In some scenarios, multiple webpages may be linked together with a common domain name forming a website. The examples of a website may include, but are not limited to, e-commerce websites, personal blogs, organization websites, government websites, informational websites, social media websites, educational websites, non-profit websites, news website, etc. Different versions of a webpage may exist for users based in different locales. For example, a first version of a webpage may be used for user devices/users that correspond to United States of America (English). A second version of the webpage may be used for user devices/users that correspond to United States of America (Spanish). A third version of the webpage may be used for user devices/users that correspond to United Kingdom (English). Similarly, different versions of the webpage may exist for different breakpoints or types of user devices (e.g., mobile phone, tablet, phablet, desktop computers, or the like). Different versions (versions based on locales, breakpoints, or combinations thereof) of the webpage may be referred to as different webpages without deviating from the scope of the disclosure.

Time to load for a webpage refers to a time taken for a webpage to be loaded on a user device. The webpage page to be loaded may be provided by a server (e.g., a main server, a content delivery network, or the like) to the user device upon request by the user device (*i.e.*, a web browser on the user device) For example, if all the elements within the webpage are loaded within "2.5" seconds, then the time to load is "2.5" seconds. The term "time to load" may be interchangeably referred to as "loading time" throughout the disclosure. An average time to load for a webpage refers to an average time taken for a webpage to be loaded on a user device across a multiple user devices. Time to interact for a webpage refers to a time taken for a webpage to activate interactive features on the webpage post loading on a user device. Interactive features are the elements in a webpage which results in performing a particular action on the webpage once a user input is provided. The user input may be click, touch, or hovering over the interactive features. Interactive features may be, but not limited to, video, search bar, image that expands post clicking, AR element, and the like. For example, if the interactive features are activated within "0.4" seconds after loading the webpage, then the time to interact is "0.4" seconds. An average time to interact for a webpage refers to an average time taken for a webpage to activate interactive features on the webpage post loading across multiple user devices.

Conversion rate for a webpage is indicative of a proportion of users that visit the webpage and perform one or more pre-defined actions on the webpage with respect to a total number of users that visit the webpage. The pre-defined actions may include, but are not limited to, selecting a product for purchase for a webpage being a product listing page for a product, completing a financial transaction for a purchase for a webpage being a transaction page, adding a product in a cart for a webpage being a product listing page for a product, setting up an account, providing feedback, subscribing to a service such as newsletters, online videos, educational content, sharing the link of the webpage with other users, and the like.

Locale refers to a combination of geographic location (such as country, territory, or referring to any code mentioned in ISO (International organization for standardization) 3166 etc.) and language (such as English, French, German, or referring to any code mentioned in ISO 639 etc.). Examples of locale include, but are not limited to, American-English (EN_US), British-English (EN_UK), Indian-English (EN_IN).

Historical data for a webpage includes data (e.g., development data, deployment data, operational data, or the like) for various metrics with respect to the webpage and past versions of the webpage. The historical data for the webpage may include (*i.e*., may be indicative of), but is not limited to, a version number of the webpage, a plurality of past versions/version numbers of with the webpage, a format of the webpage, a type and size of content included in the website, a time taken for development and deployment of the webpage, performance data for the webpage, conversion data for the webpage, programming languages associated with the webpage, a structure of the webpage, or the like. The historical data for the webpage may include similar data for each past version of the webpage.

Historical performance data for a webpage is a subset of historical data of the webpage. Historical performance data includes performance data associated with the webpage and past versions of the webpage. For example, the historical performance data for a webpage may include a time to load and time to interact for the webpage and past versions of the webpage. Further, the historical data may include performance data for various versions of the webpage. These versions may be different combinations of factors such as, but not limited to, breakpoint, locale, etc.

Historical conversion data for a webpage is a subset of historical data of the webpage. Historical conversion data includes conversion data associated with the webpage and past versions of the webpage. For example, the historical conversion data for a webpage may include a conversion rate for the webpage and past versions of the webpage. Further, the historical data may include conversion data for various versions of the webpage. These versions may be for different combinations of factors such as, but not limited to, breakpoint, locale, , etc.

Deployment history of a webpage comprises previous versions related to the webpage and the time of the deployment of the changes. The deployment history may also comprise metadata such as details of the users involved in making the changes or approving the changes. Further, the deployment history may include previously determined impact scores indicative of performance or conversion associated with the webpage. The deployment history may also include the deployment strategies selected for the respective impact scores.

Caching arrangement may include utilizing content delivery network (CDN) for caching the webpages. A CDN is a geographically distributed network of proxy servers and their data centers that can deliver cached web content (such as webpages) to users faster. Utilizing CDN for caching webpages improves the loading time of webpages. Caching arrangement may further include proxy server caching and browser caching and the rules associated with the caching. For example, caching arrangement may include rules associated with size of the cache, frequency of data updates in the cache, proximity of cache to user devices, cache expiration settings, cache validation, cache behavior, and the like.

Versioning history of a webpage includes all the changes made to a webpage at different time instances. The versioning history of a webpage may include the software code associated with the webpage and the time of deployment of the webpage. The versioning history of a webpage may include changes made to a previous version and the time of deployment of the webpage. The changes may include changes made to the software code, content, metadata. Changes made to the software code may include changes made to code structure, coding language, caching arrangement, count of code snippets and the like.

### Overview:

In recent times, changes made to a webpage may have impact on performance of the webpage and conversion rate. The performance of a webpage has become an important factor to increase user engagement. The prominent parameters to measure the performance of a webpage is the time to load a webpage and the time to interact with the webpage. Further, conversion rate associated with the webpage is also an important factor that impact the businesses. For example, a high conversion rate may be indicative of improved sales, successful marketing, user experience, and the like.

A user (such as a developer of owner of a webpage) may update the webpages at regular intervals based on business decisions, user feedback etc. Such updates may be, but not limited to, optimize, compress, re-write, update the code, changing programming language, changing size of files, modifying hosting server or content delivery network (CDN) servers, adding augmented reality renderer, adding up-sell product carousel to increase engagement of users. The updates made to webpage may have a positive or negative impact on performance of webpage and conversion rates associated with the webpage.

A developer may edit the software code to update the webpage. The developer may commit the updated software code to a code repository such as GitHub. For deployment of the updated software, continuous integration/continuous delivery (CI/CD) pipelines may be used. CI/CD pipeline is triggered by the updates made to the code in code repository. The CI/CD pipeline may include various stages. Examples of the various stages in the CI/CD pipeline may include, but are not limited to, version control, static application security testing (SAST), building, unit testing, integration testing, virtual machine provisioning, dynamic application security testing (DAST), application provisioning, and the like. Once all the stages of CI/CD pipelines are performed, the updated software code is deployed to update the webpage.

In some scenarios, updates made to webpages may decrease the performance of the webpage but may increase the conversion rate. In some scenarios, updates made to webpages may increase the performance of the webpage but may decrease the conversion rate. Further, some updates may increase the performance as well as the conversion rates. In some cases, some updates may decrease the performance as well as the conversion rates. Conventionally, there is no provision in the existing art to predict the impact of the proposed changes to the webpages on performance and/or conversion rate of the webpages before deploying the changes.

The present disclosure is directed to managing updates to webpages. A server receives a set of elements indicative of a set of updates to be made to a webpage that is currently deployed. The set of elements includes program code. The set of updates may be changes to code, changing size of files in the webpage etc. The server predicts an impact score indicative of an impact of the set of updates on a set of performance metrics. The impact score may be predicted using a machine learning (ML) model before deployment of the updated webpage. For example, the update made to a webpage may be decreasing the file sizes of existing images in the webpage. This may have a positive impact on the performance of the page. The time to load the webpage after decreasing the file sizes of existing images may reduce.

Based on the predicted impact score and a set of rules, a deployment strategy may be selected from a plurality of pre-defined deployment strategies. The deployment strategy is executed for updating and deployment of the webpage based on the set of updates. The pre-defined deployment strategies may be deploying the updates to the webpage, sending the updates along with the impact score for a human action, or not deploying the updates to the webpage. The set of rules may comprise rules indicative of the ranges of impact scores and their corresponding deployment strategies.

In some embodiments of the disclosure, in addition to predicting an impact score indicative of an impact of the set of updates on a set of performance metrics, the server may also predict another impact score indicative of an impact of the set of updates on a set of conversion metrics. The selection of the deployment strategy may be based on both the impact scores. In some embodiments, each impact score may be assigned a weight based on business requirements. The weighted impact scores are then aggregated. The aggregated impact score may be used to selection of the deployment strategy based on the set of rules.

The present disclosure allows predicting an impact of proposed updates to a webpage on its performance and conversion rates in real-time before actually deploying the updates to the webpage. Further, since the ranges of the impact scores may correspond to different deployment strategies, the present disclosure enables discarding the updates with poor impact on performance and conversion automatically, hence preventing the deployment of such updates. Further, it provides an opportunity to modify the updates to improve the performance or conversion before deployment of the updated webpages.

### Figure description:

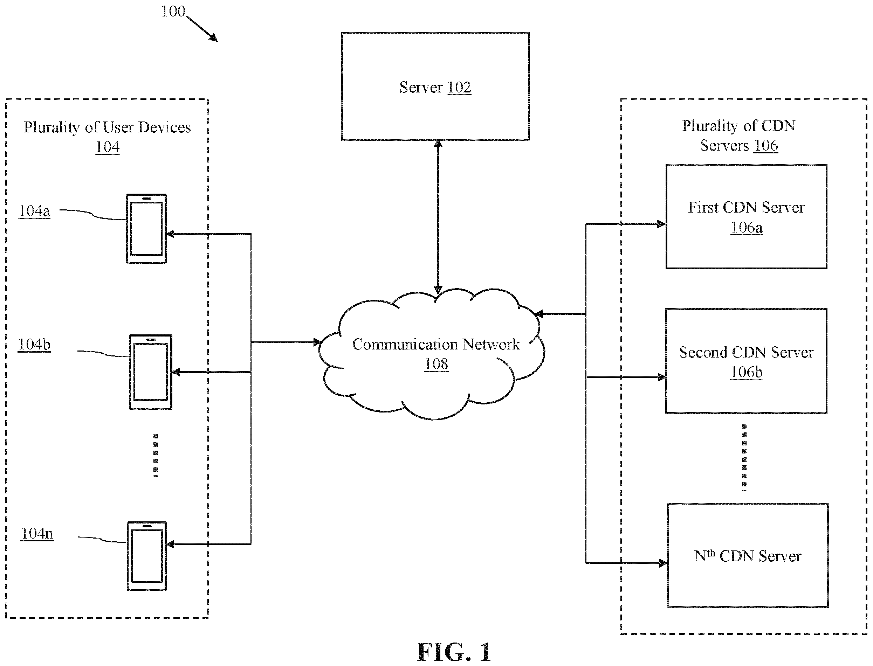

FIG. 1 is a block diagram that illustrates a system environment 100 for managing updates to webpages, in accordance with an exemplary embodiment of the present disclosure. The system environment 100 is shown to include a server 102, a plurality of user devices 104 (e.g., first through n^{th} user devices 104a-104n) and a plurality of content delivery network (CDN) servers 106 (e.g., first through n^{th} CDN servers 106 a-106n). The system environment 100 is further shown to include a communication network 108. The server 102, the plurality of user devices 104, and the plurality of CDN servers 106, may communicate with each other by way of the communication network 108. Examples of the communication network 108 may include, but are not limited to, a wireless fidelity (Wi-Fi) network, a light fidelity (Li-Fi) network, a local area network (LAN), a wide area network (WAN), a metropolitan area network (MAN), a satellite network, the Internet, a fiber optic network, a coaxial cable network, an infrared (IR) network, a radio frequency (RF) network, and a combination thereof.

The server 102 may include suitable logic, circuitry, interfaces, and/or code, executable by the circuitry, which may be configured to manage updates of webpages. The server 102 may be operated by an entity that manages the websites comprising multiple webpages. The managing a website may include development of the website, hosting of the website, etc. Examples of the entity could include, a government, an e-commerce, company, a media company, a social media company and the like. The server 102 may be implemented by one or more processors, such as, but not limited to, an application-specific integrated circuit (ASIC) processor, a reduced instruction set computing (RISC) processor, a complex instruction set computing (CISC) processor, and a field programmable gate array (FPGA) processor. The one or more processors may also correspond to central processing units (CPUs), graphics processing units (GPUs), network processing units (NPUs), digital signal processors (DSPs), or the like. It will be apparent to a person of ordinary skill in the art that the server 102 may be compatible with multiple operating systems.

The first user device 104a may include suitable logic, circuitry, interfaces and/or code, executable by the circuitry, which may be configured to execute one or more instructions based on user input received from a corresponding user. The first user device 104a may be further configured to execute an application that is hosted by a hosting server, the server 102 or through the CDN server 106a. The first user device 104a may be used to access webpages or websites hosted by the server 102. In one embodiment, the application may be a standalone application installed on the first user device 104a. In another embodiment, the application may be accessible by way of a web browser installed on the first user device 104a. Examples of the application may include software applications such as, but not limited to, e-commerce applications, video streaming applications, productivity applications, e-learning applications, or the like. It will be apparent to those of skill in the art that examples of the application are not limited to those mentioned above. In an actual implementation, the application may include any enterprise or consumer software application. Examples of the first user device 104a may include, but are not limited to, a personal computer, a laptop, a smartphone, a tablet, or the like. The second through n^{th} user devices 104b-104n may be functionally similar to the first user device 104a. Further, some of the user devices of the plurality of user devices 104 may be utilized to make changes to the webpages. Examples of changes may be, but are not limited to, adding/modifying/deleting pieces of the software code or the content associated with the website and the like.

The first CDN server 106a may include suitable logic, circuitry, interfaces, and/or code, executable by the circuitry, which may be configured to provide cached content to the plurality of user devices 104 in the system environment 100. Content may include webpages, web objects, downloadable objects (media files, software, and documents), applications, real time media streams, and other components of internet delivery (DNS, routes, and database queries). The second through n^{th} CDN servers 106b-106n may be functionally similar to the first CDN server 106a. In some embodiments, the first CDN server 106a may be configured to provide content to a first geographic location. Similarly, the second CDN server 106b may be configured to provide content to a second geographic location and so on.

Examples of the communication network 108 may include, but are not limited to, a wireless fidelity (Wi-Fi) network, a light fidelity (Li-Fi) network, a local area network (LAN), a wide area network (WAN), a metropolitan area network (MAN), a satellite network, the Internet, a fiber optic network, a coaxial cable network, an infrared (IR) network, a radio frequency (RF) network, and a combination thereof.

Each of the plurality of user devices 104 may provide an input to the server 102 through the communication network 108 via a wired connection or a wireless connection, or a combination thereof. The wired connection between each of the plurality of user devices 104 and the server 102 may include, but is not limited to, B-ISDN, DSL, ADSL, ADSL+2, SDSL, VDSL, and cable. The wireless connection between each of the plurality of user devices 104 and the server 102 may include, but is not limited to, wireless LAN, wireless MAN, wireless PAN, and wireless WAN.

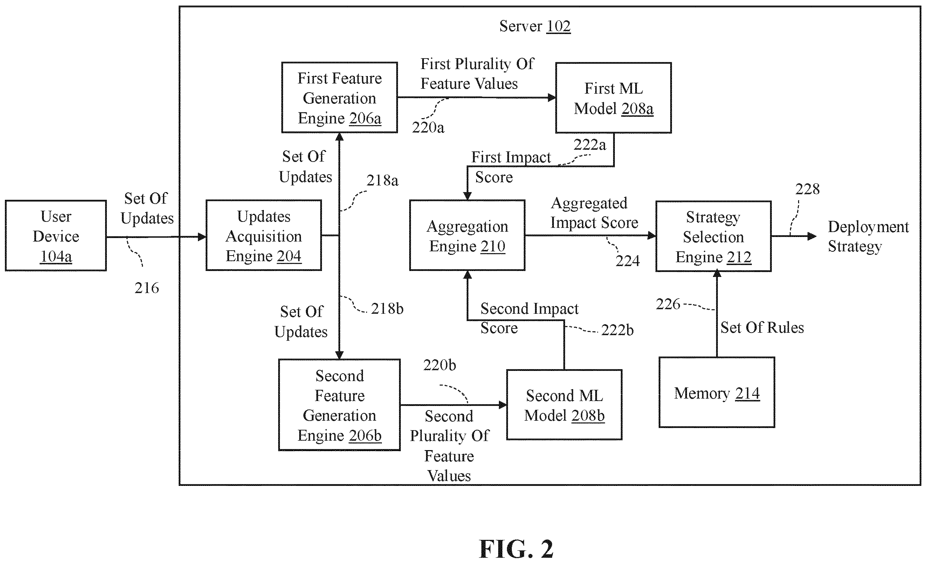

FIG. 2 is a diagram that illustrates a process flow for managing updates to webpage in a server 102 of FIG. 1, in accordance with an embodiment of the present disclosure. Referring to FIG. 2, the server 102 may include an updates acquisition engine 204, a first feature generation engine 206a, a second feature generation engine 206b, a first machine learning (ML) model 208a, a second ML model 208b, an aggregation engine 210, a strategy selection engine 212, and a memory 214.

The updates acquisition engine 204 may receive from a user device 104a(such as one of the plurality of user devices 104), a set of updates to be made to a webpage that is currently deployed (as shown by arrow 216). The user device 104a may be a device associated with a user (such as a developer) who may make changes to software code associated with a webpage using the user device 104a. The user device 104a may be communicatively coupled to the server 102. The set of updates may comprise updates made to software code associated with the webpage. In some embodiments, the set of updates may further comprise updates made to content associated with the webpage.

The updates acquisition engine 204 may communicate the set of updates to the first feature generation engine 206a (as shown by arrow 218a). The first feature generation engine 206a may determine a first plurality of features based on the set of updates. The first plurality of features may be indicative of the features impacting the performance of the webpage. In some embodiments, the first plurality of features may comprise one or more of: a page type of a webpage, a code structure of a webpage, a count of code snippets associated with a webpage, a locale associated with a webpage, a caching arrangement for loading a webpage, a versioning history of a webpage, a current average time taken for a webpage to load on a user device, a current average time taken for a webpage to activate interactive features on the webpage post loading, a previous average time taken for a webpage to load on a user device, a previous average time taken for a webpage to activate interactive features on the webpage post loading.

The first feature generation engine 206a may further determine a first plurality of feature values for the first plurality of features based on historical data associated with a plurality of webpages. The historical data may include a deployment history of the plurality of webpages and historical performance data for each of the plurality of webpages. The first feature generation engine 206a may communicate the first plurality of feature values to the first ML model 208a (as shown by arrow 220a).

The first ML model 208a may determine a first impact score based on the first plurality of feature values. The first impact score may be indicative of an impact of the set of updates on a set of performance metrics associated with the webpage. The set of performance metrics associated with the webpage may comprise one or more of: an average time taken for a webpage to load on a user device and an average time taken for a webpage to activate interactive features on the webpage post loading. In one embodiment, the first ML model 208a may communicate the first impact score to the aggregation engine 210 (as shown by arrow 222a).

Further, the updates acquisition engine 204 may communicate the set of updates to the second feature generation engine 206b (as shown by arrow 218b). The second feature generation engine 206b may determine a second plurality of features based on the set of updates. The second plurality of features may be indicative of the features impacting the conversion rate of the webpage. In some embodiments, the second plurality of features may comprise one or more of: a page type of a webpage, a code structure of a webpage, a count of code snippets associated with a webpage, a locale associated with a webpage, a caching arrangement for loading a webpage, a versioning history of a webpage, a current average time taken for a webpage to load on a user device, a current average time taken for a webpage to activate interactive features on the webpage post loading, a previous average time taken for a webpage to load on a user device, a previous average time taken for a webpage to activate interactive features on the webpage post loading, type of content in the webpage, etc.

The second feature generation engine 206b may further determine a second plurality of feature values for the first plurality of features based on the historical data associated with a plurality of webpages. The historical data may further include historical conversion data for each of the plurality of webpages. The second feature generation engine 206b may communicate the second plurality of feature values to the second ML model 208b (as shown by arrow 220b).

The second ML model 208b may determine a second impact score based on the second plurality of feature values. The second impact score may be indicative of an impact of the set of updates on a set of conversion metrics associated with the webpage. The set of conversion metrics associated with the webpage may include a conversion rate associated with the webpage. In one embodiment, the second ML model 208b may communicate the second impact score to the aggregation engine 210 (as shown by arrow 222b).

The aggregation engine 210 may receive the first impact score from the first ML model 208a and the second impact score from the second ML model 208b. The aggregation engine 210 may determine an aggregated impact score. In some embodiments, the aggregation engine 210 may be configured to apply a first weight to the first impact score to generate a first weighted impact score. The aggregation engine 210 may be configured to apply a second weight to the second impact score to generate a second weighted impact score. The first weight and second weight may be pre-defined. The first weight may be indicative of an extent to which the performance metric is correlated with the deployment strategy. The second weight may be indicative of an extent to which the conversion metric is correlated with the deployment strategy. For example, a first impact score (indicative of impact on performance) received from the first ML model 208a may be -4.5 and a second impact score (indicative of impact on conversion) may be +6. Assuming the first weight to be 0.4 and the second weight to be 0.6, then the first weighted impact score is determined to be -1.8 and the second weighted impact score is determined to be +3.6. Thus, the aggregated impact score is determined to be +1.8. Therefore, in this example, the aggregated impact score indicates an overall positive impact due to the changes to the webpages. Even though the impact on performance in this case is negative, but due to the assignment of more weight to the second impact score, the overall impact is reflected as positive. In some embodiments, the first weight and the second weight may be pre-determined. The first weight and the second weight may be varied based on the business requirement.

The changes in weights may have an impact on the aggregated impact. In above example, if the first weight is set to 0.6 and the second weight to 0.4, then the aggregation engine 210 may determine the first weighted impact score to be -2.7 and the second weighted impact score to be +2.4. Thus, the aggregated impact score is determined to be -0.3. Therefore, in this example, despite the impact on conversion being positive, the aggregated impact score indicates an overall negative impact due to the updates to the webpage because the weightage given to first impact score is more.

The aggregation engine 210 may be configured to determine an aggregated impact score based on the first and second weighted impact scores. In some embodiments, the aggregation engine 210 may be configured to combine the first and second weighted impact scores to determine the aggregated impact score. The aggregation engine 210 may be configured to communicate the aggregated impact score to the strategy selection engine 212. In some embodiments, the aggregated impact score may be stored in the memory 214 or in an external database for future analysis.

The strategy selection engine 212 may receive the aggregated impact score from the aggregation engine 210 (as shown by arrow 224). The strategy selection engine 212 may receive a set of rules from the memory 214 (as shown by arrow 226). Examples of the memory 214 may include a random-access memory (RAM), a read only memory (ROM), a removable storage drive, a hard disk drive (HDD), a flash memory, a solid- state memory, and the like. It will be apparent to a person skilled in the art that the scope of the disclosure is not limited to realizing the memory 214 in the server 102, as described herein. In another embodiment, the memory 214 may be realized in form of a database server or a cloud storage working in conjunction with the server 102, without departing from the scope of the disclosure.

In some embodiments, the strategy selection engine 212 may receive the set of rules from an external database (not shown in Figures). Each rule in the set of rules may mention a threshold range for aggregated impact scores and the corresponding deployment strategy for deploying the changes to the updated webpage. For example, if the aggregated impact score falls within a first threshold range, the strategy selection engine 212 may select a first deployment strategy (as shown by arrow 228). Similarly, if the aggregated impact score falls within a second threshold range, the strategy selection engine 212 may select a second deployment strategy and so on. In some embodiments, a plurality of deployment strategies corresponding to a plurality of threshold ranges may comprise, but are not limited to, deploying the updated webpage, sending for human review, or not deploying the updates to the webpages. The deployment strategy of the webpage may be selected based on the first impact score and the second impact score. Therefore, the deployment strategy is selected based on impact on performance as well as conversion rate associated with the webpage.

In some embodiments, the first ML model 208a may communicate the first impact score to the strategy selection engine 212. The strategy selection engine 212 may select the deployment strategy based on the first impact score and the set of rules. In such case, each rule in the set of rules may mention a threshold range for impact score and the corresponding deployment strategy for deploying the changes to the updated webpage. For example, if the impact score falls into a first threshold, the strategy selection engine 212 may select a first deployment strategy. Similarly, if the impact score falls into a second threshold, the strategy selection engine 212 may select a second deployment strategy and so on. In some embodiments, a plurality of deployment strategies corresponding to a plurality of threshold ranges may comprise, but are not limited to, deploying the updated webpage, sending for human review, or not deploying the updates to the webpages. The deployment strategy of the webpage may be selected based on the first impact score which indicate the impact on performance of the webpage. In such embodiments, the aggregated impact score is not calculated and the deployment strategy may be selected based on only the first impact score, i.e., based on the impact on performance of the webpage and not on the impact on conversion is not considered for selecting the deployment strategy.

Notably, the functions performed by the updates acquisition engine 204, the first feature generation engine 206a, the second feature generation engine 206b, the first ML model 208a, the second ML model 208b, the aggregation engine 210, and the strategy selection engine 212 may be realized using a processing circuitry.

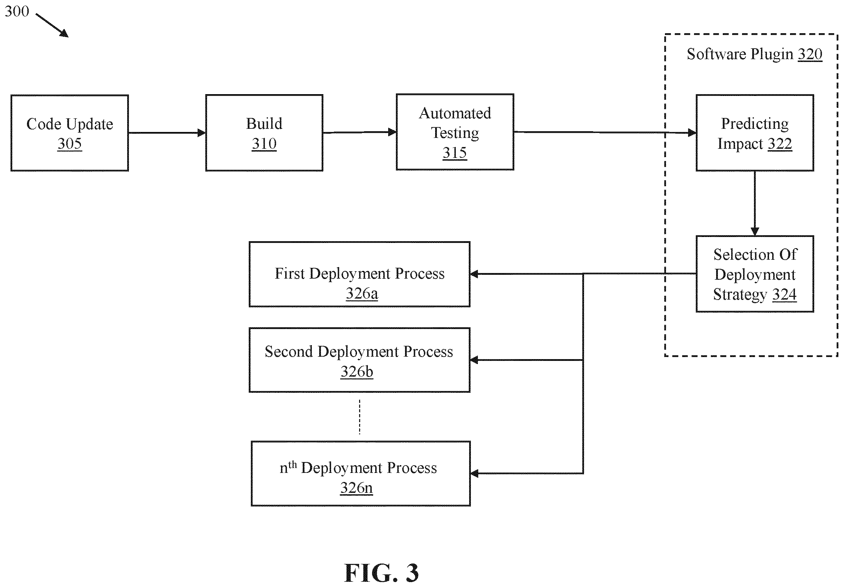

In some embodiments, the plurality of deployment strategies may correspond to a plurality of integration/continuous deployment (CI/CD) pipelines. FIG. 3 illustrates the flow 300 in a CI/CD pipeline, in accordance with an embodiment of the present disclosure. Initially, a developer may update the software code associated with a webpage (at step 305). There may be multiple changes made to the software code. For example, the changes could be one or more of: adding a piece of code, removing a piece of code, modifying a piece of code, updating the metadata and content of the webpage, changing the structure of the code, changing a programming language of the code, changing the caching arrangement for loading a webpage and the like.

Updating the changes made to the software code of a webpage may be the first stage in the CI/CD pipeline. The updated software code may be committed over version control tools such as GitHub^{®} and the like. Once the updated software code is committed, it may trigger the next stage of the CI/CD pipeline, which is the build stage (step 310). A set of operations for the build stage may include compilation of a project. Subsequent to the build stage, the CI/CD pipeline may include an automated testing stage (at 315). The automated testing stage may comprise of plurality of stages such as, but not limited to, static application security testing (SAST), unit testing, integration testing, dynamic application security testing (DAST), and the like.

Subsequent to the automated testing stage, the CI/CD pipeline may include the stage where impact of the updated software code on performance or conversion may be predicted (at step 322) and a deployment strategy may be selected (at step 324). The method of predicting the impact of performance and conversion is explained with reference to FIG. 2, therefore, for the sake of brevity, it is not discussed here. The stages of predicting impact and selection of deployment strategy are executed using a software plugin (320) in the code for executing the CI/CD pipeline.

Further, subsequent to the selection of the deployment strategy, one of the plurality of deployment processes (at step 326a, 326b, ... 326n) may be executed based on the deployment strategy . For example, if the deployment strategy indicates deploying the updated webpage, the deployment process is deployment of the webpage based on the deployment strategy. If the deployment strategy indicates sending the updated software code for a human review, then the deployment process is sending the updated software code for a human review and so on.

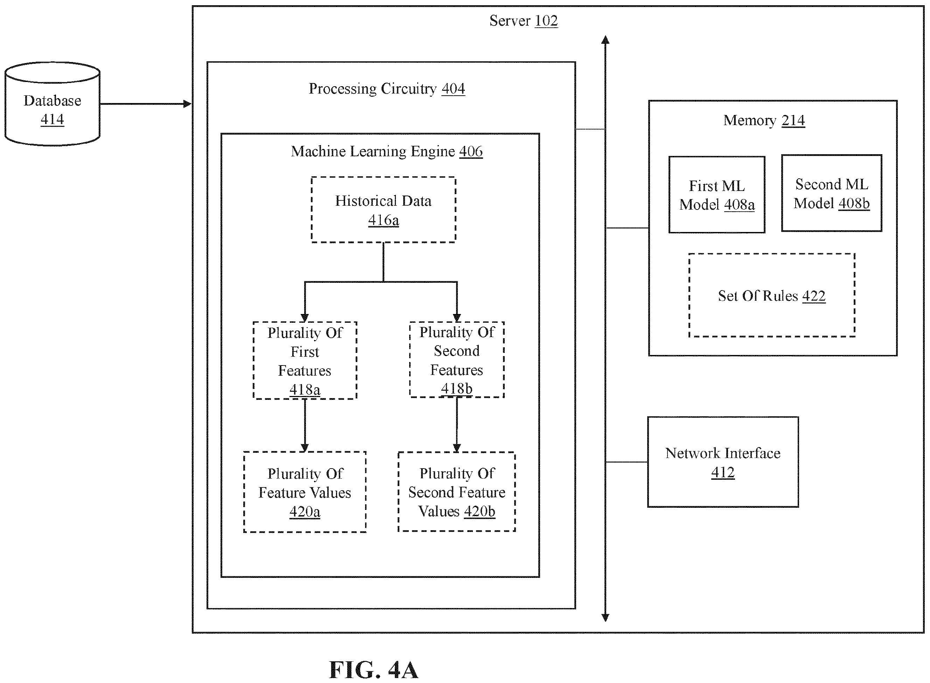

FIG. 4A is a diagram that illustrates an exemplary scenario for training ML models for managing updates of webpages, in accordance with various embodiments of the present disclosure. The server 102 may include a memory 214, a network interface 412, processing circuitry 404, a machine learning engine 406, and a first ML model 408a and a second ML model 408b.

The memory 214 may include suitable logic, circuitry, and interfaces that may be configured to store one or more instructions which when executed by the processing circuitry 404 cause the processing circuitry 404 to perform various operations for managing updates to webpages. The memory 214 may be accessible by the processing circuitry 404, and the machine learning engine 406. The memory 214 may be configured to store a first ML model 408a, a second ML model 408b, and a set of rules 422. Examples of the memory 214 may include, but are not limited to, a random-access memory (RAM), a read only memory (ROM), a removable storage drive, a hard disk drive (HDD), a flash memory, a solid-state memory, or the like. It will be apparent to a person skilled in the art that the scope of the disclosure is not limited to realizing the memory 214 in the server 102, as described herein. In another embodiment, the memory 214 may be realized in the form of a database or a cloud storage working in conjunction with the server 102, without departing from the scope of the disclosure.

The network interface 412 may include suitable logic, circuitry, interfaces, and/or code, executable by the circuitry, that may be configured to enable the server 102 to communicate with the database 414, and user device 104a (as shown in FIG. 2), a plurality of user devices 104, and a plurality of CDN servers 106 (as shown in FIG. 1). The network interface 412 may be implemented as a hardware, software, firmware, or a combination thereof. Examples of the network interface 412 may include a network interface card, a physical port, a network interface device, an antenna, a radio frequency transceiver, a wireless transceiver, an Ethernet port, a universal serial bus (USB) port, or the like.

The processing circuitry 404 may include suitable logic, circuitry, interfaces, and/or code, executable by the circuitry, which may be configured to execute the instructions stored in the memory 214 to perform various operations for managing updates to webpages. The processing circuitry 404 may be configured to perform various operations associated with data collection and data processing. The processing circuitry 404 may be implemented by one or more processors, such as, but not limited to, an application-specific integrated circuit (ASIC) processor, a reduced instruction set computing (RISC) processor, a complex instruction set computing (CISC) processor, and a field programmable gate array (FPGA) processor. The one or more processors may also correspond to central processing units (CPUs), graphics processing units (GPUs), network processing units (NPUs), digital signal processors (DSPs), or the like. It will be apparent to a person of ordinary skill in the art that the processing circuitry 404 may be compatible with multiple operating systems.

When the server 102 is operating in the training phase, the processing circuitry 404 may be configured to receive historical data 416a. In one embodiment, the server 102 may receive the historical data 416a from a database, such as the database 414. The database 414 may be an external database. In some embodiments, the database 414 may be a part of the memory 214. The processing circuitry 404 may be further configured to store the historical data 416a in the memory 214 or a cloud database server (not shown).

The processing circuitry 404 may be further configured to cause the machine learning engine 406 to determine the plurality of first features 418a and the plurality of second features 418b by analyzing and processing the historical data.

The machine learning engine 406 may include suitable logic, circuitry, interfaces, and/or code, executable by the circuitry, which may be configured to perform one or more operations for managing updates to webpages. Examples of the machine learning engine 406 may include, but are not limited to, an ASIC processor, a RISC processor, a CISC processor, and an FPGA processor. The machine learning engine 406 may also correspond to a CPU, a GPU, an NPU, a DSP, or the like. It will be apparent to a person of ordinary skill in the art that the machine learning engine 406 may be compatible with multiple operating systems. Further, the machine learning engine 406 may include a machine-learning model that implements any suitable machine-learning techniques, statistical techniques, or probabilistic techniques for performing the one or more operations associated with the training of the first ML model 408a and the second ML model 408b.

When the server 102 is operating in the training phase, the machine learning engine 406 may be configured to process and analyze the historical data stored in the memory 214. The machine learning engine 406 may use various feature or variable selection techniques to analyze the historical data. In some embodiments, the machine learning engine 406 may determine a plurality of first features 418a that directly or indirectly impact performance of webpages. For example, the machine learning engine 406 may determine a page type of a webpage, a code structure of a webpage, a count of code snippets associated with a webpage, a locale associated with a webpage, a caching arrangement for loading a webpage, a versioning history of a webpage, a current average time taken for a webpage to load on a user device, a current average time taken for a webpage to activate interactive features on the webpage post loading, a previous average time taken for a webpage to load on a user device, a previous average time taken for a webpage to activate interactive features on the webpage post loading impact performance of webpages etc. Based on the historical data, the machine learning engine 406 may be further configured to determine the plurality of first feature values 420a corresponding to the plurality of first features 418a. The plurality of first feature values 420a may include numerical values, alphabetical values, or the like associated with the corresponding plurality of first features 418a. For example, a first feature may be a current average time taken for a webpage to load on a user device. Therefore, the first feature value may be 3.5 seconds. The plurality of first feature values 420a may provide a historical pattern of the performance of webpages.

In an embodiment, the plurality of first features 418a determined by the machine learning engine 406 may include a page type of a webpage. The page type may be a home page which may be a starting point of a user's journey. In some examples, the page type may be a feed page which may include content that is updated frequently. Such pages may be pages associated with social networking sites, or news website. The page type may also be a search page which presents search results. Other examples of page type include about page, registration page, blog page, portfolio page, product description page, cart page, transaction page, contacts page, etc. The page type may impact the performance of a webpage. For example, home page or a product description page may include more content and may therefore take longer to load as compared to contacts page.

In an embodiment, the plurality of first features 418a determined by the machine learning engine 406 may include a code structure of a webpage. Further, a count of code snippets associated with a webpage may also affect the performance of a webpage. For example, a longer code may increase the time to load associated with the webpage. A webpage may show different performance at different geographical locations. Further, a webpage in different languages may also show varying performance. For example, the time to load or time to interact a webpage in French may be less or more than the same webpage in English.

In one embodiment, the machine learning engine 406 may be configured to train the first ML model 408a based on a first training dataset. The first training dataset may comprise the plurality of first features 418a and the plurality of first feature values 420a. The machine learning engine 406 may input the plurality of first features 418a, and the plurality of first feature values 420a, to the first ML model 408a for training. Based on the plurality of first features 418a and the plurality of first feature values 420a, the first ML model 408a may learn a pattern or trend in the plurality of first feature values 420a corresponding to the historical performance of the webpages. In other words, during training, the first ML model 408a learns (or determines) a correlation between feature values of the plurality of first features 418a and impact on performance of webpages, such as a negative or a positive impact on performance of webpages. The machine learning engine 406 may train the first ML model 408a in a way that when provided with new data (changes to the code) associated with the webpage, the first ML model 408a may correctly determine a first impact score indicative of impact on the performance of the webpage. The machine learning engine 406 may train the first ML model 408a using one or more machine learning algorithms. Examples of the first ML model 408a may include but are not limited to, a Support Vector Machine (SVM), a Logistic Regression model, or a neural network model.

The machine learning engine 406 may validate an accuracy level of the trained first ML model 408a. For example, the machine learning engine 406 may provide a test dataset associated with a test webpage as an input to the trained first ML model 408a. The test dataset may include historical performance data associated with the test webpage. As an output, the trained first ML model 408a may output a first impact score for the test webpage. The machine learning engine 406 may be configured to compare the first impact score determined by the trained first ML model 408a with a known impact on performance in the past for the test webpage and generate a validation output, i.e., the machine learning engine 406 may check whether the trained first ML model 408a has determined impact score indicative of an impact on performance of the webpage which is same as the known impact on performance in the past for the test webpage. The validation output may be used as a feedback to improve the accuracy level of the trained first ML model 408a. In one embodiment, the validation of the first ML model 408a may be an iterative process until a desired accuracy level is achieved for the first ML model 408a.

When the server 102 is operating in the training phase, the machine learning engine 406 may be further configured to determine a plurality of second features 418b that directly or indirectly impact conversion of webpages. For example, the machine learning engine 406 may determine a page type of a webpage, a code structure of a webpage, a count of code snippets associated with a webpage, a locale associated with a webpage, a caching arrangement for loading a webpage, a versioning history of a webpage, a current average time taken for a webpage to load on a user device, a current average time taken for a webpage to activate interactive features on the webpage post loading, type of content in the webpage, etc. Based on the historical data, the machine learning engine 406 may be further configured to determine the plurality of second feature values 420b corresponding to the plurality of second features 418b. The plurality of second feature values 420b may include numerical values, alphabetical values, or the like associated with the corresponding plurality of second features 418b. For example, a second feature may be presence of an augmented reality (AR) feature. Therefore, the second feature value may be "No" or "Yes". The plurality of second feature values 420b may provide a historical pattern of the conversion of webpages.

In an embodiment, the plurality of second features 418b determined by the machine learning engine 406 may include type of content in a webpage. For example, including features such as AR elements, personalized carousel in a webpage may increase the conversion rate of the webpage. Further, some features (such as a page type of a webpage, a code structure of a webpage, a count of code snippets associated with a webpage, a locale associated with a webpage, a caching arrangement for loading a webpage, a versioning history of a webpage, a current average time taken for a webpage to load on a user device, a current average time taken for a webpage to activate interactive features on the webpage post loading) may be determined for training the first ML model 408a as well as the second ML model 408b. The performance of a webpage may have an impact on the conversion of the webpage. For example, if a webpage loads faster, then the likelihood of a user performing pre-defined actions (such as completing a purchase transaction) on the webpage increases.

In one embodiment, the machine learning engine 406 may be configured to train the second ML model 408b based on a second training dataset. The second training dataset may comprise the plurality of second features 418b and the plurality of second feature values 420b. The machine learning engine 406 may input the plurality of second features 418b, and the plurality of second feature values 420b, to the second ML model 408b for training. Based on the plurality of second features 418b and the plurality of second feature values 420b, the second ML model 408b may learn a pattern or trend in the plurality of second feature values 420b corresponding to the historical conversion of the webpages. In other words, during training, the second ML model 408b learns (or determines) a correlation between feature values of the plurality of second features 418b and impact on conversion of webpages, such as a negative or a positive impact on conversion of webpages. The machine learning engine 406 may train the second ML model 408b in a way that when provided with new data (changes to the code) associated with the webpage, the second ML model 408b may correctly determine a second impact score indicative of impact on the conversion of the webpage. The machine learning engine 406 may train the second ML model 408b using one or more machine learning algorithms. Examples of the second ML model 408b may include but are not limited to, a Support Vector Machine (SVM), a Logistic Regression model, or a neural network model.

The machine learning engine 406 may validate an accuracy level of the trained second ML model 408b. For example, the machine learning engine 406 may provide a test dataset associated with a test webpage as an input to the trained second ML model 408b. The test dataset may include historical conversion data associated with the test webpage. As an output, the trained second ML model 408b may output a second impact score for the test webpage. The machine learning engine 406 may be configured to compare the second impact score determined by the trained second ML model 408b with a known impact on conversion in the past for the test webpage and generate a validation output, i.e., the machine learning engine 406 may check whether the trained second ML model 408b has determined impact score indicative of an impact on conversion of the webpage which is same as the known impact on conversion in the past for the test webpage. The validation output may be used as a feedback to improve the accuracy level of the trained second ML model 408b. In one embodiment, the validation of the second ML model 408b may be an iterative process until a desired accuracy level is achieved for the second ML model 408b.

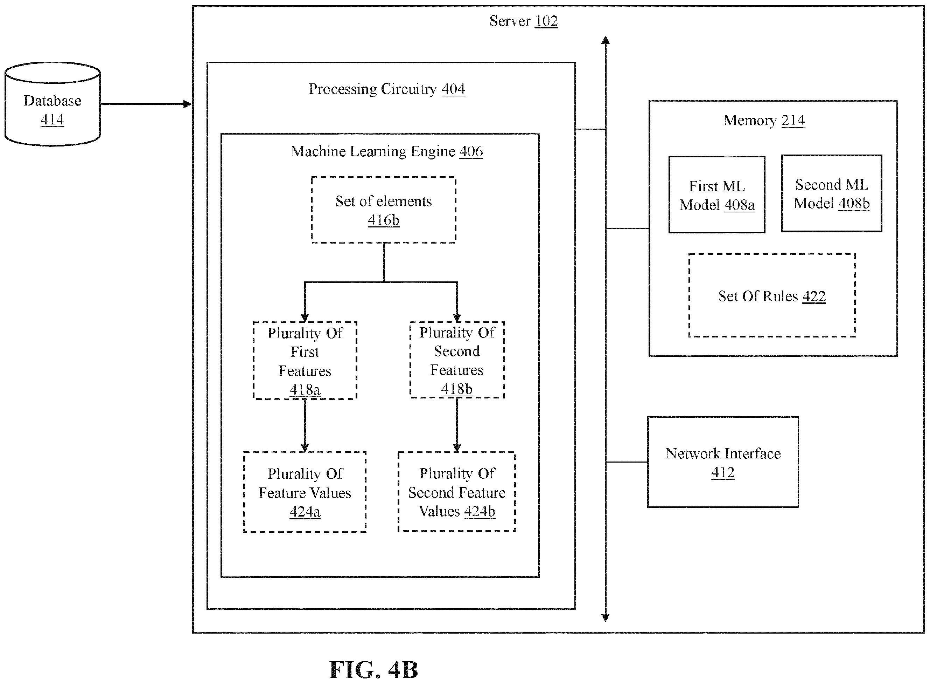

FIG. 4B is a diagram that illustrates an exemplary scenario for managing updates to webpages using the trained ML models, in accordance with an embodiment of the present disclosure. The server 102 may include the processing circuitry 404, the machine learning engine 406, the trained ML model 408, the memory 214, and the network interface 412.

In the implementation phase, the server 102 may be configured to receive a set of elements 416b indicative of a set of updates to be made to a webpage that is currently deployed. The set of elements 416b may include at least program code for updating the webpage. The server 102 may be configured to receive the set of elements 416b from a repository, or a user device such as the user device 104a of FIG. 2.

In one embodiment, the set of elements 416b may be provided as input to the trained first ML model 408a. In another embodiment, a new plurality of first feature values 424a for the plurality of first features 418a may be determined based on the set of elements 416b such that the new plurality of first feature values 424a are provided as input to the trained first ML model 408a. In one embodiment, the processing circuitry 404 may be configured to determine the new plurality of first feature values 424a based on the set of elements 416b. In another embodiment, the machine learning engine 406 may be configured to determine the new plurality of first feature values 424a based on the set of elements 416b.

As an output to the inputted new plurality of first feature values 424a, the trained first ML model 408a may be configured to determine a first impact score for the webpage. In other words, based on the inputted new plurality of first feature values 424a, the first ML model 408a may understand the past and real-time versions of the webpage, and determine the changes made to the webpage and the impact of the changes made to the webpage on performance of the webpage. Thus, the first ML model 408a predicts the first impact score indicative of an impact of the set of updates on a set of performance metrics associated with the webpage. In one embodiment, the set of performance metrics may be one or more of an average time taken for a webpage to load on a user device and an average time taken for a webpage to activate interactive features on the webpage post loading.

Once the first ML model 408a predicts the first impact score, the processing circuitry 404 may be configured to fetch a set of rules 422 which may be stored in the memory 214. The set of rules 422 may comprise rules indicative of the ranges of first impact scores and their corresponding deployment strategies.

Based on the set of rules 422 and the first impact score determined by the first ML model 408a, the processing circuitry 404 may be configured to select a deployment strategy from a plurality of deployment strategies, as explained above. For example, if the first impact score falls within a first range of first impact scores, then a first deployment strategy may be selected. The first deployment strategy may be deploying the updates to the webpage. If the first impact score falls within a second range of first impact scores then a second deployment strategy may be selected. The second deployment strategy may be sending the updates along with the impact score for a human action. Further, if the first impact score falls within a third range of first impact scores then a third deployment strategy may be selected. The third deployment strategy may be deploying the updates to the webpage. It is to be noted that the plurality of deployment strategies may comprise more than three deployment strategies, for the sake of brevity, only three deployment strategies are explained herein.

In some embodiments, instead of selecting the deployment strategy based on only the impact on performance (indicated by the first impact score), the processing circuitry 404 may be configured to select a deployment strategy based on the performance as well as conversion. In addition to predicting the first impact score by the trained first model 408a, the trained second model 408b may be configured to predict a second impact score. This is explained in detail below.

In some embodiments, the set of elements 416b may be provided as input to the trained second ML model 408b. In another embodiment, a new plurality of second feature values 424b for the plurality of second features 418b may be determined based on the set of elements 416b such that the new plurality of second feature values 424b are provided as input to the trained second ML model 408b. In one embodiment, the processing circuitry 404 may be configured to determine the new plurality of second feature values 424b based on the set of elements 416b. In another embodiment, the machine learning engine 406 may be configured to determine the new plurality of second feature values 424b based on the set of elements 416b.

As an output to the inputted new plurality of second feature values 424b, the trained second ML model 408b may be configured to determine a second impact score for the webpage. In other words, based on the inputted new plurality of second feature values 424b, the second ML model 408b may understand the past and real-time versions of the webpage, and determine the changes made to the webpage and the impact of the changes on the conversion rate of the webpage. Thus, the second ML model 408b predicts the second impact score indicative of an impact of the set of updates on a set of conversion metrics associated with the webpage. In one embodiment, the a set of conversion metrics may include at least a conversion rate associated with the webpage.

The processing circuitry 404 may assign a first weight to the first impact score predicted by the trained first ML model 408a. The first weight may consider impact on performance associated with the updated webpage. In an embodiment, the processing circuitry 404 may apply the first weight to the first impact score to determine a first weighted impact score. Further, the processing circuitry 404 may assign a second weight to the second impact score predicted by the trained second ML model 408b. The second weight may consider impact on conversion associated with the updated webpage. In an embodiment, the processing circuitry 404 may apply the second weight to the second impact score to determine a second weighted impact score. The processing circuitry 404 may be configured to determine an aggregated impact score based on the first weighted impact score and the second weighted impact score. In some embodiments, the aggregated impact score may be determined by adding the first weighted impact score and the second weighted impact score.

Once the processing circuitry 404 determines the aggregated impact score, the processing circuitry 404 may be configured to fetch the set of rules 422 which may be stored in the memory 214. The set of rules 422 may comprise rules indicative of the ranges of aggregated impact scores and their corresponding deployment strategies.

Based on the set of rules 422 and the aggregated impact score, the processing circuitry 404 may be configured to select a deployment strategy from a plurality of deployment strategies, as explained above. For example, if the aggregated impact score falls within a first range of aggregated impact scores, then a first deployment strategy may be selected. The first deployment strategy may be deploying the updates to the webpage. If the aggregated impact score falls within a second range of aggregated impact scores, then a second deployment strategy may be selected. The second deployment strategy may be sending the updates along with the aggregated impact score for a human action. Further, if the aggregated impact score falls within a third range of aggregated impact scores, then a third deployment strategy may be selected. The third deployment strategy may be deploying the updates to the webpage.

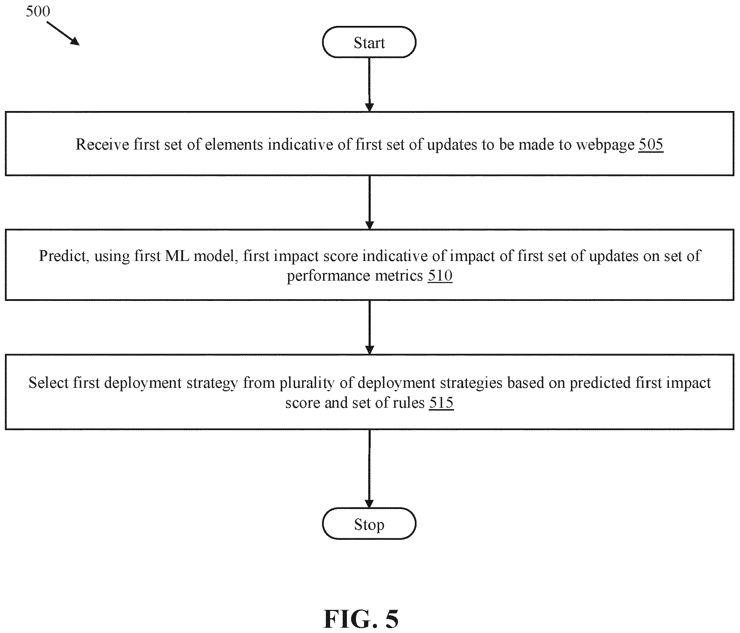

FIG. 5 illustrates a flowchart 500 of method for managing updates to a webpage based on predicting impact on performance of the webpage, in accordance with an exemplary embodiment of the present disclosure. At 505, a first set of elements is received. The first set of elements indicative of a first set of updates to be made to a webpage. The server (such as, the server 102) receives the first set of elements. The first set of elements include at least program code for updating the first webpage.

At 510, a first impact score indicative of an impact of the first set of updates on a set of performance metrics associated with the first webpage is predicted. The first impact score is predicted by the server using a first machine learning (ML) model based on the first set of elements. The first impact score is predicted prior to deployment of the updated first webpage.

At 515, a first deployment strategy from a plurality of deployment strategies is selected by the server. The first deployment strategy is selected based on the predicted first impact score and a set of rules. The first deployment strategy is executed for updating and deployment of the first webpage based on the first set of updates. In some embodiment, the plurality of deployment strategies corresponds to a plurality of integration/continuous deployment (CI/CD) pipelines. The first CI/CD pipeline of the plurality of CI/CD pipelines is executed for updating and deployment of the first webpage.

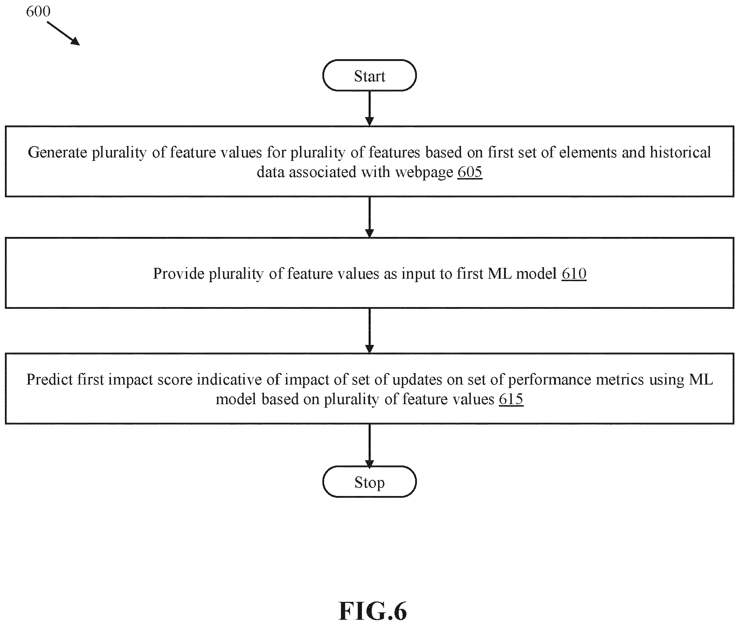

FIG. 6 represents a flow chart 600 that illustrates a method for predicting an impact score for managing updates to a webpage, in accordance with an exemplary embodiment of the present disclosure. At 605, a plurality of feature values is generated for a first plurality of features for the prediction of the impact of the updates on the set of performance metrics associated with the first webpage. The plurality of feature values is generated by the server based on the first set of elements and the historical data associated with the first webpage.

At 610, the plurality of feature values is provided as input to the first ML model by the server.

At 615, the first impact score is predicted by the server using the first ML model. The first impact score is predicted based on plurality of feature values. The first impact score is indicative of impact of first set of updates on the set of performance metrics.

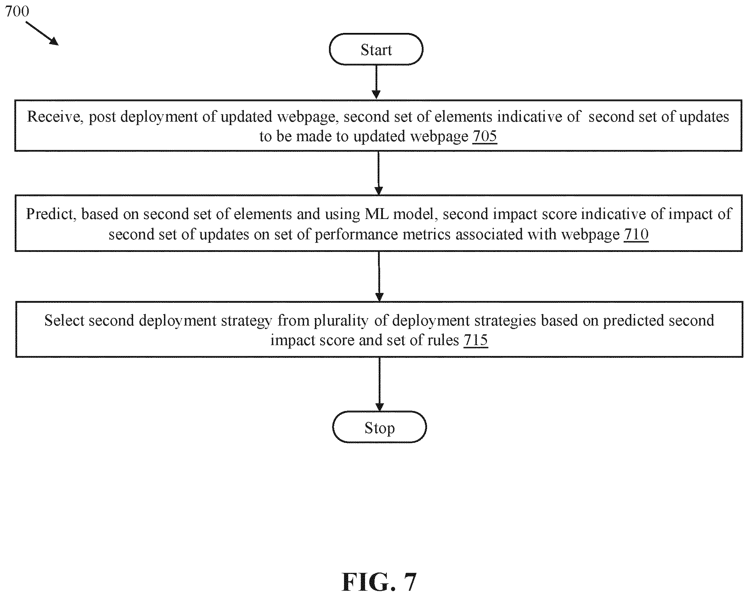

FIG. 7 represents a flow chart 700 that illustrates a method for managing second set of updates to a webpage updated with the first set of updates, in accordance with an exemplary embodiment of the present disclosure. The method illustrated in FIG. 7 may be implemented after a first set of updates were deployed to the webpage and the user, such as a developer, wants to further update the webpage. The steps 705-715 may be performed after step 515 illustrated in FIG. 5.

At 705, a second set of elements is received post the deployment of the updated first webpage by the server. The second set of elements is indicative of a second set of updates to be made to the updated first webpage.

At 710, a second impact score is predicted by the server using the first ML model. The second impact score is indicative of an impact of the second set of updates on the set of performance metrics associated with the first webpage.

At 715, a second deployment strategy is selected by the server. The second deployment strategy is selected from the plurality of pre-defined deployment strategies based on the predicted second impact score and the set of rules. The second deployment strategy is executed for the updating and deployment of the first webpage based on the second set of updates.

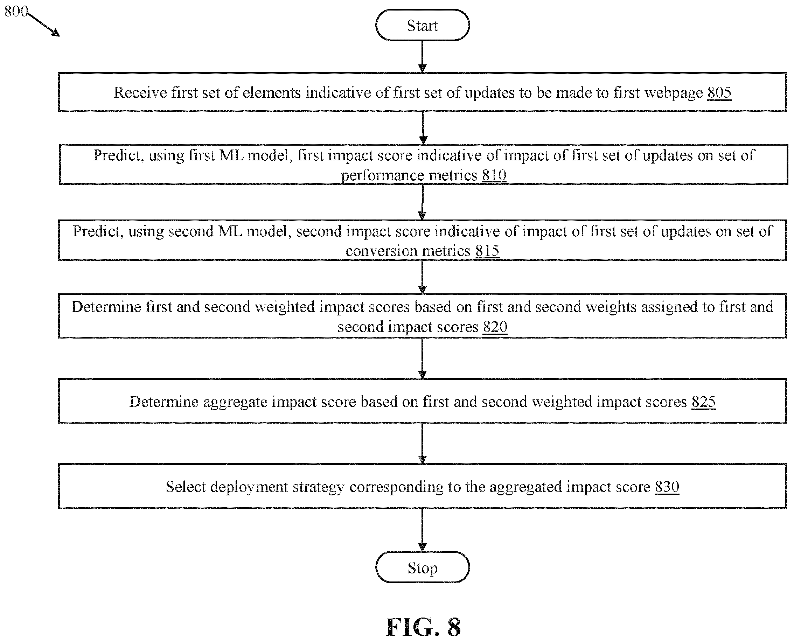

FIG. 8 represents a flow chart 800 that illustrates a method for managing updates to a webpage based on predicting impact on performance and conversion associated with the webpage, in accordance with an exemplary embodiment of the present disclosure. At 805, a first set of elements is received. The first set of elements indicative of a first set of updates to be made to a webpage. The server (such as, the server 102) receives the first set of elements. The first set of elements include at least program code for updating the first webpage.

At 810, a first impact score indicative of an impact of the first set of updates on a set of performance metrics associated with the first webpage is predicted. The first impact score is predicted by the server using a first machine learning (ML) model based on the first set of elements. The first impact score is predicted prior to deployment of the updated first webpage.

At 815, a second impact score indicative of an impact of the first set of updates on a set of conversion metrics associated with the first webpage is predicted. The second impact score is predicted by the server using a second machine learning (ML) model based on the first set of elements. The second impact score is predicted prior to deployment of the updated first webpage.

At 820, first and second weighted impact scores are determined by the server. The first second weighted impact scores are determined based on first and second weights assigned to first and second impact scores.

At 825, the first and second weighted impact scores are aggregated to determine an aggregated impact score.

At 830, a deployment strategy from a plurality of deployment strategies is selected by the server. The deployment strategy is selected based on the aggregated impact score and a set of rules. The deployment strategy is executed for updating and deployment of the first webpage based on the first set of updates. In some embodiment, the plurality of deployment strategies corresponds to a plurality of integration/continuous deployment (CI/CD) pipelines. The first CI/CD pipeline of the plurality of CI/CD pipelines is executed for updating and deployment of the first webpage.

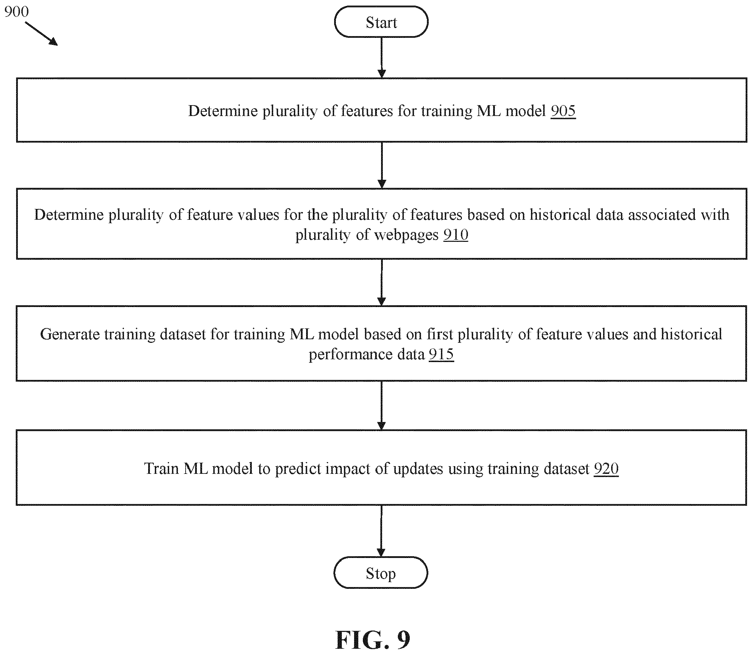

FIG. 9 represents a flow chart 900 that illustrates a method for training an ML model for managing updates to a webpage, in accordance with an exemplary embodiment of the present disclosure. At 905, a plurality of features is determined by the server for training the first ML model. The first plurality of features include at least two or more of a page type of a webpage, a code structure of a webpage, a type of content associated with a webpage, a count of content snippets included in a webpage, a locale associated with a webpage, a caching arrangement for loading a webpage, a versioning history of a webpage, a current average time taken for a webpage to load on a user device, a current average time taken for a webpage to activate interactive features on the webpage post loading, a previous average time taken for a webpage to load on a user device, a previous average time taken for a webpage to activate interactive features on the webpage post loading.

At 910, a first plurality of feature values is determined for the first plurality of features. The determination of the first plurality of feature vectors is based on historical data associated with a plurality of webpages including the first webpage. The historical data includes a deployment history of the plurality of webpages and historical performance data for each of the plurality of webpages.

At 915, a training dataset for training the first ML model is generated by the server. The training dataset is based on the first plurality of feature values and the historical performance data.

At 920, the first ML model is trained to predict impact of updates on a performance of a webpage, The first ML model is trained using the first training dataset by the server. The trained first ML model is used for the prediction of the first impact score.

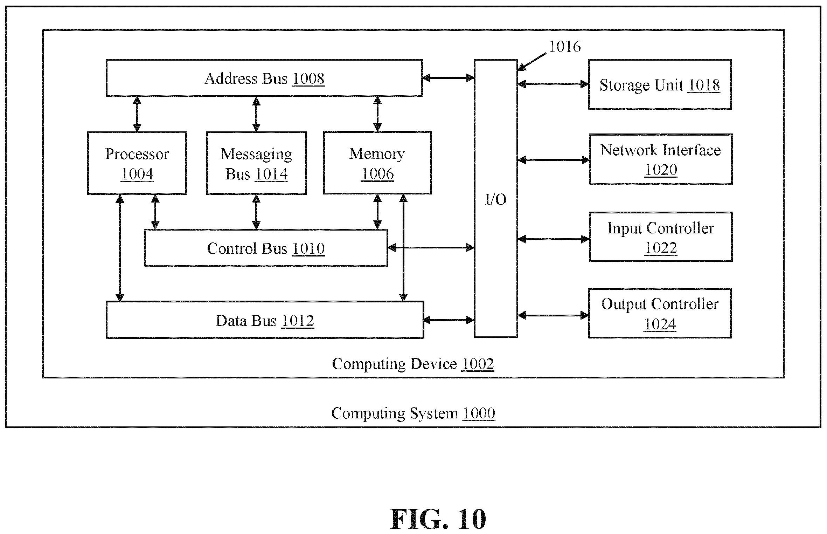

FIG. 10 shows an example computing system 1000 for carrying out the methods of the present disclosure, in accordance with an embodiment of the present disclosure. Specifically, FIG. 10 shows a block diagram of an embodiment of the computing system 1000 according to example embodiments of the present disclosure.

The computing system 1000 may be configured to perform any of the operations disclosed herein, such as, for example, any of the operations discussed with reference to the functional modules described in relation to FIG. 2. The computing system 1000 can be implemented as a conventional computer system, an embedded controller, a laptop, a server, a mobile device, a smartphone, a set-top box, a kiosk, a vehicular information system, one or more processors associated with a television, a customized machine, any other hardware platform, or any combination or multiplicity thereof. In one embodiment, the computing system 1000 is a distributed system configured to function using multiple computing machines interconnected via a data network or bus system.

The computing system 1000 includes computing devices (such as a computing device 1002). The computing device 1002 includes one or more processors (such as a processor 1004) and a memory 1006. The processor 1004 may be any general-purpose processor(s) configured to execute a set of instructions. For example, the processor 1004 may be a processor core, a multiprocessor, a reconfigurable processor, a microcontroller, a digital signal processor (DSP), an application-specific integrated circuit (ASIC), a graphics processing unit (GPU), a neural processing unit (NPU), an accelerated processing unit (APU), a brain processing unit (BPU), a data processing unit (DPU), a holographic processing unit (HPU), an intelligent processing unit (IPU), a microprocessor/microcontroller unit (MPU/MCU), a radio processing unit (RPU), a tensor processing unit (TPU), a vector processing unit (VPU), a wearable processing unit (WPU), a field programmable gate array (FPGA), a programmable logic device (PLD), a controller, a state machine, gated logic, discrete hardware component, any other processing unit, or any combination or multiplicity thereof. In one embodiment, the processor 1004 may be multiple processing units, a single processing core, multiple processing cores, special purpose processing cores, co-processors, or any combination thereof. The processor 1004 may be communicatively coupled to the memory 1006 via an address bus 1008, a control bus 1010, a data bus 1012, and a messaging bus 1014.

The memory 1006 may include non-volatile memories such as a read only memory (ROM), a programable read only memory (PROM), an erasable programmable read only memory (EPROM), a flash memory, or any other device capable of storing program instructions or data with or without applied power. The memory 1006 may also include volatile memories, such as a random-access memory (RAM), a static random-access memory (SRAM), a dynamic random-access memory (DRAM), and a synchronous dynamic random-access memory (SDRAM). The memory 1006 may include single or multiple memory modules. While the memory 1006 is depicted as part of the computing device 1002, a person skilled in the art will recognize that the memory 1006 can be separate from the computing device 1002.

The memory 1006 may store information that can be accessed by the processor 1004. For instance, the memory 1006 (e.g., one or more non-transitory computer-readable storage mediums, memory devices) may include computer-readable instructions (not shown) that can be executed by the processor 1004. The computer-readable instructions may be software written in any suitable programming language or may be implemented in hardware. Additionally, or alternatively, the computer-readable instructions may be executed in logically and/or virtually separate threads on the processor 1004. For example, the memory 1006 may store instructions (not shown) that when executed by the processor 1004 cause the processor 1004 to perform operations such as any of the operations and functions for which the computing system 1000 is configured, as described herein. Additionally, or alternatively, the memory 1006 may store data (not shown) that can be obtained, received, accessed, written, manipulated, created, and/or stored. The data can include, for instance, the data and/or information described herein in relation to FIGS. 1-11. In some implementations, the computing device 1002 may obtain from and/or store data in one or more memory device(s) that are remote from the computing system 1000.

The computing device 1002 may further include an input/output (I/O) interface 1016 communicatively coupled to the address bus 1008, the control bus 1010, and the data bus 1012. The I/O interface 1016 is configured to couple to one or more external devices (e.g., to receive and send data from/to one or more external devices). Such external devices, along with the various internal devices, may also be known as peripheral devices. The I/O interface 1016 may include both electrical and physical connections for operably coupling the various peripheral devices to the computing device 1002. The I/O interface 1016 may be configured to communicate data, addresses, and control signals between the peripheral devices and the computing device 1002. The I/O interface 1016 may be configured to implement any standard interface, such as a small computer system interface (SCSI), a serial-attached SCSI (SAS), a fiber channel, a peripheral component interconnect (PCI), a PCI express (PCIe), a serial bus, a parallel bus, an advanced technology attachment (ATA), a serial ATA (SATA), a universal serial bus (USB), Thunderbolt, FireWire, various video buses, or the like. The I/O interface 1016 is configured to implement only one interface or bus technology. Alternatively, the I/O interface 1016 is configured to implement multiple interfaces or bus technologies. The I/O interface 1016 may include one or more buffers for buffering transmissions between one or more external devices, internal devices, the computing device 1002, or the processor 1004. The I/O interface 1016 may couple the computing device 1002 to various input devices, including mice, touch screens, scanners, biometric readers, electronic digitizers, sensors, receivers, touchpads, trackballs, cameras, microphones, keyboards, any other pointing devices, or any combinations thereof. The I/O interface 1016 may couple the computing device 1002 to various output devices, including video displays, speakers, printers, projectors, tactile feedback devices, automation control, robotic components, actuators, motors, fans, solenoids, valves, pumps, transmitters, signal emitters, lights, and so forth.

The computing system 1000 may further include a storage unit 1018, a network interface 1020, an input controller 1022, and an output controller 1024. The storage unit 1018, the network interface 1020, the input controller 1022, and the output controller 1024 are communicatively coupled to the central control unit (e.g., the memory 1006, the address bus 1008, the control bus 1010, and the data bus 1012) via the I/O interface 1016. The network interface 1020 communicatively couples the computing system 1000 to one or more networks such as wide area networks (WANs), local area networks (LANs), intranets, the Internet, wireless access networks, wired networks, mobile networks, telephone networks, optical networks, or combinations thereof. The network interface 1020 may facilitate communication with packet-switched networks or circuit-switched networks which use any topology and may use any communication protocol. Communication links within the network may involve various digital or analog communication media such as fiber optic cables, free-space optics, waveguides, electrical conductors, wireless links, antennas, radiofrequency communications, and so forth.

The storage unit 1018 is a computer-readable medium, preferably a non-transitory computer-readable medium, comprising one or more programs, the one or more programs comprising instructions which when executed by the processor 1004 cause the computing system 1000 to perform the method steps of the present disclosure. Alternatively, the storage unit 1018 is a transitory computer-readable medium. The storage unit 1018 can include a hard disk, a floppy disk, a compact disc read only memory (CD-ROM), a digital versatile disc (DVD), a Blu-ray disc, a magnetic tape, a flash memory, another non-volatile memory device, a solid-state drive (SSD), any magnetic storage device, any optical storage device, any electrical storage device, any semiconductor storage device, any physical-based storage device, any other data storage device, or any combination or multiplicity thereof. In one embodiment, the storage unit 1018 stores one or more operating systems, application programs, program modules, data, or any other information. The storage unit 1018 is part of the computing device 1002. Alternatively, the storage unit 1018 is part of one or more other computing machines that are in communication with the computing device 1002, such as servers, database servers, cloud storage, network attached storage, and so forth.

The input controller 1022 may include suitable logic, circuitry, interfaces, and/or code, executable by the circuitry, which may be configured to control one or more input devices that may be configured to receive an input such as set of elements. The output controller 1024 may include suitable logic, circuitry, interfaces, and/or code, executable by the circuitry, which may be configured to control one or more output devices that may be configured to render/output the outcome such as selected deployment strategy of the operation executed to process the received input.

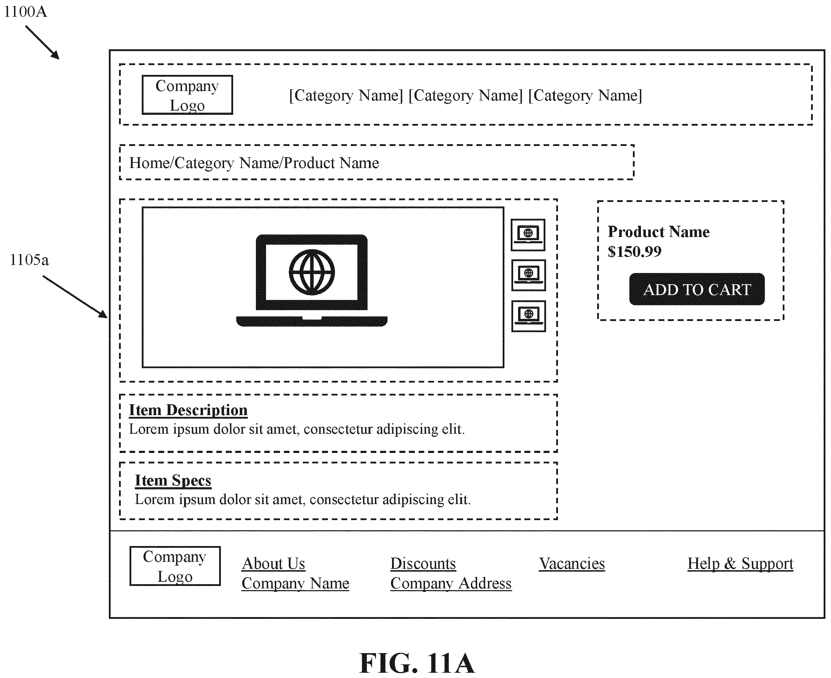

FIGS. 11A-11B collectively illustrate user interface (UI) screens showing updated and non-updated versions of a webpage, in accordance with an embodiment of the present disclosure. FIG. 11A represents an exemplary UI screen 1100A of an e-commerce webpage 1105a (hereafter referred as "webpage 1105a") which is currently deployed. The webpage 1105a is a product description page giving details of a product - a laptop. The webpage includes content such as text (product description, specification etc.), images (such as company logo and product images), actionable buttons (such as "ADD TO CART", "About Us", "Discounts", etc.). All the blocks in the webpage 1105a may be static - i.e., the content displayed on the webpage 1105a may remain the same for all the users visiting the webpage 1105a.

A developer may update the software code associated with the webpage to personalize the webpage. The developer may add a piece of software code to include a block indicating a personalized carousel. The block may display multiple additional products related to the main product as shown in the webpage.

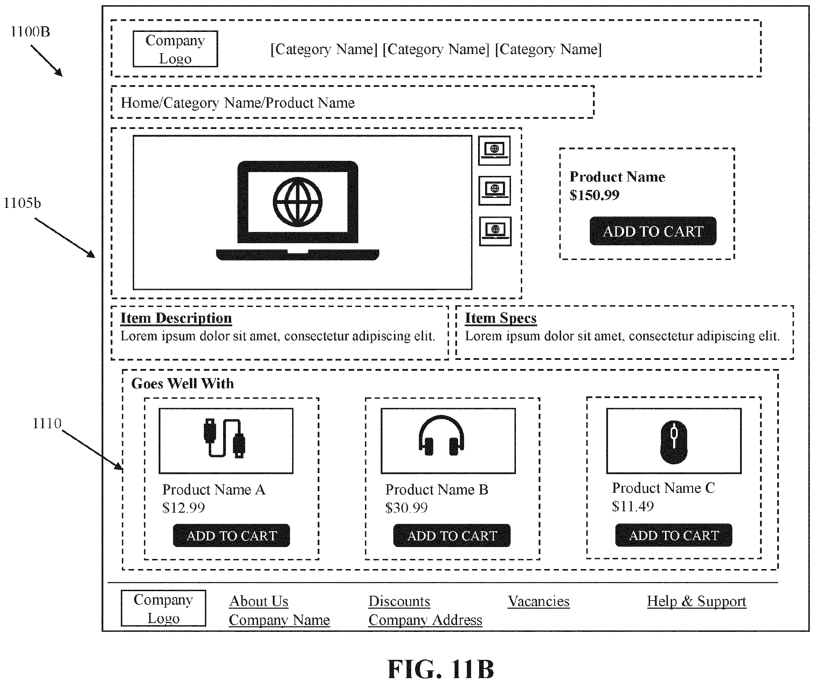

FIG. 11B represents an exemplary UI screen 1100B of an e-commerce webpage 1105b with proposed updates. As shown in FIG. 11B, the webpage 1105b associated with a description of the product (in this example, a laptop) may be modified to include a block 1110 depicting the personalized carousel. The block 1110 displays a connector, a headphone, and a mouse that a user may be interested to purchase along with purchasing the laptop displayed on the webpage 1105b. The block 1110 may also include details related to the additional products such as product name, price of the product etc.

The block 1110 may be dynamic in nature. In other words, the block 1110 may be displayed differently for different users. The block 1110 may be personalized for a user based on the browsing history of the user, purchase history of the user, purchase history of other users who purchased the same product etc. The updates to the webpage 1105b may be made by updating the software code corresponding to the webpage 1105b. The updated software code may be received by the server 102 for deploying the updated webpage 1105b. The updated software code may include a piece of code adding block 1110 to the currently deployed webpage.

Based on the updated software code, the server 102 may be configured to predict a first impact score indicative of an impact of the updates (i.e., addition of block 1110) on a set of performance metrics associated with the webpage 1105b. The first impact score is predicted prior to deployment of the updated webpage. A machine learning engine such as the machine learning engine 406 may be configured to determine a plurality of first features 418a. In this case, the plurality of first features 418a may be code structure, nature of code, processing time required to execute the updated code and the like. The machine learning engine 406 may be configured to determine a plurality of first feature values 424a corresponding to the plurality of first features 418a. For example, the first feature value for processing time required to execute the updated code may be "0.4 seconds". The plurality of first feature values 424a are provided as input to a first ML model, such as the first ML model 408a. The first impact score may be predicted using the first ML model 408a based on the based on the inputted plurality of first feature values 424a.

Since the block 1110 is personalized for each user, the software code for block 1110 may include parts which might require analyzing previous data related to the product, or data related to the user. This may increase the executing time and hence may increase the time to load the block. Thus, adding the block 1110 may have a negative impact on the performance of the webpage 11 05b as compared to the performance of webpage 1105a. This may be reflected in the first impact score. For example, the first ML model may predict the first impact score to be -0.6.

Further, based on the updated software code, the server 102 may be configured to predict a second impact score indicative of an impact of the updates (i.e., addition of block 1110) on a set of conversion metrics associated with the webpage 1105b. The second impact score is predicted prior to deployment of the updated second webpage. The machine learning engine 406 may be configured to determine a plurality of second features 418b. In this case, the plurality of second features 418b may be nature of code, processing time required to execute the updated code and the like. The machine learning engine 406 may be configured to determine a plurality of second feature values 424b corresponding to the plurality of second features 418b. For example, the second feature value for nature of code may be "dynamic". The plurality of second feature values 424b are provided as input to a second ML model, such as the second ML model 408b. The second impact score may be predicted using the second ML model 408b based on the based on the inputted plurality of second feature values 424b.

Including the block 1110 in the webpage 1105b may have a positive impact on the conversion of the webpage 1105b. A user visiting the webpage 1105a may only end up purchasing a laptop. However, the user visiting the webpage 1105b may purchase one or more of the additional products suggested in the block 1110 due to personalized suggestions. Thus, the amount of purchase or the number of items purchased may be increased. Therefore, the conversion rate may be increased due to the addition of the block 1110. This may be reflected in the second impact score. For example, the second ML model may predict the second impact score to be +1.2.

The server 102 may select a deployment strategy based on the first and second impact scores and a set of rules (such as the set of rules 422). The deployment strategy may be selected from a plurality of deployment strategies. The plurality of deployment strategies may include deploying the updated webpage, not deploying the updated webpage, and sending the updated webpage for further review.

In some embodiments, the server 102 may determine an aggregated impact score based on the first impact score and the second impact score. In an embodiment, the server 102 may be configured to determine a first weighted impact score and a second weighted impact score. The first weighted impact score may be determined based on a first weight assigned to the first impact score. The second weighted impact score may be determined based on a second weight assigned to the second impact score. For example, the first weight may be 0.3 and the second weight may be 0.7. Therefore, the first weighted impact score may be -0.18 and the second weighted impact score may be +0.84. The server 102 may be configured to determine an aggregated impact score based on the first weighted impact score and the second weighted impact score. For example, in this case, the aggregated impact score may be +0.66. Further, the server 102 may be configured to select a deployment strategy based on a set of rules and the aggregated impact score. The set of rules may map a deployment strategy with a threshold range of an aggregated impact score. For example, a first threshold range may be -0.5 to -0.1, the second threshold range may be 0 to 0.59, and a third threshold range may be 0.60 to 1. Each threshold range of the aggregated impact score may correspond to a deployment strategy. For example, the first threshold range may correspond to a first deployment strategy. The first deployment strategy may be not deploying the updates to the webpage. The second and third threshold ranges may correspond to second and third deployment strategies. The second deployment strategy may be to send the updated software code along with the aggregated impact score for human review. The third deployment strategy may be to deploy the updated webpage.

Therefore, in this example, since the aggregated impact score (+0.66) fall in the third threshold range, the server 102 may select the third deployment strategy and the updated webpage 1105b may deployed.

Various embodiments of the disclosure provide a non-transitory computer readable medium having stored thereon, computer executable instructions, which when executed by a computer, cause the computer to execute one or more operations for managing updates to webpages. The one or more operations include receiving a first set of elements indicative of a first set of updates to be made to a first webpage that is currently deployed. The first set of elements includes at least program code for updating the first webpage. The one or more operations include predicting based on the first set of elements and using a first machine learning (ML) model, a first impact score indicative of an impact of the first set of updates on a set of performance metrics associated with the first webpage. The first impact score is predicted prior to deployment of the updated first webpage. The one or more operations include selecting a first deployment strategy from a plurality of pre-defined deployment strategies based on the predicted first impact score and a set of rules. The first deployment strategy is executed for the updating and the deployment of the first webpage based on the first set of updates.

The disclosed embodiments encompass numerous advantages including predicting impact of updates being proposed to a webpage on performance/conversion of the webpage before actually deploying the updated webpage. Based on the predicted impact, a strategy for deployment is selected. Therefore, the methods and systems described herein may predict situations when the updates to a webpage may give undesirable results and may automatically prevent the deployment of such webpages or may highlight the undesirable results to a developer before deploying such changes, thus, reducing the time for making deployment decisions as compared to the manual decision-making techniques. Furthermore, it is possible to make the deployment decisions for multiple updates in lesser time as the impact due to all the updates are predicted and aggregated impact is determined. Further, by implementing the methods and systems described herein for managing the updates to webpages, it is possible to make the deployment decisions for multiple webpages quicker than the conventional techniques.

Therefore, the disclosed embodiments. Since the impact of updates to webpages on performance and conversion are predicted before actually deploying the updated webpages, the likelihood of problems/issues/glitches being highlighted due to the updates on either performance or conversion after the deployment of webpages, reduces drastically. The disclosed embodiments may thus highlight risks or negative impact on performance of webpages and/or conversion of webpages before the deployment. The disclosed embodiments may require human intervention only at some instances, instead of requiring a human intervention to decide whether or not to deploy every update to the webpage every time an update is made to the webpage, thus, automating the process of deployment of the webpages.

A person of ordinary skill in the art will appreciate that embodiments and exemplary scenarios of the disclosed subject matter may be practiced with various computer system configurations, including multi-core multiprocessor systems, minicomputers, mainframe computers, computers linked or clustered with distributed functions, as well as pervasive or miniature computers that may be embedded into virtually any device. Further, the operations may be described as a sequential process, however, some of the operations may be performed in parallel, concurrently, and/or in a distributed environment, and with program code stored locally or remotely for access by single or multiprocessor machines. In addition, in some embodiments, the order of operations may be rearranged without departing from the spirit of the disclosed subject matter.

Techniques consistent with the present disclosure provide, among other features, systems and methods for managing updates to webpages. While various embodiments of the disclosed systems and methods have been described above, it should be understood that they have been presented for purposes of example only, and not limitations. It is not exhaustive and does not limit the present disclosure to the precise form disclosed. Modifications and variations are possible in light of the above teachings or may be acquired from practicing the present disclosure, without departing from the breadth or scope.

The invention provides at least the following numbered embodiments:
1. A method for managing updates to webpages, comprising:
   receiving, by a server, a first set of elements indicative of a first set of updates to be made to a first webpage that is currently deployed, wherein the first set of elements include at least program code for updating the first webpage;
   predicting, by the server, based on the first set of elements and using a first machine learning (ML) model, a first impact score indicative of an impact of the first set of updates on a set of performance metrics associated with the first webpage, wherein the first impact score is predicted prior to deployment of the updated first webpage; and
   selecting, by the server, a first deployment strategy from a plurality of pre-defined deployment strategies based on the predicted first impact score and a set of rules, wherein the first deployment strategy is executed for the updating and the deployment of the first webpage based on the first set of updates.
2. The method of embodiment 1, further comprising:
   determining, by the server, a first plurality of features for training the first ML model, wherein:
   the first plurality of features include at least two or more of a page type of a webpage, a code structure of a webpage, a count of code snippets associated with a webpage, a locale associated with a webpage, a caching arrangement for loading a webpage, a versioning history of a webpage, a current average time taken for a webpage to load on a user device, a current average time taken for a webpage to activate interactive features on the webpage post loading, a previous average time taken for a webpage to load on a user device, a previous average time taken for a webpage to activate interactive features on the webpage post loading;
   determining, by the server, a first plurality of feature values for the first plurality of features based on historical data associated with a plurality of webpages including the first webpage, wherein the historical data includes a deployment history of the plurality of webpages and historical performance data for each of the plurality of webpages;
   generating, by the server, based on the first plurality of feature values and the historical performance data, a training dataset for training the first ML model; and
   training, by the server, using the first training dataset, the first ML model to predict impact of updates on a performance of a webpage, wherein the trained first ML model is used for the prediction of the first impact score.
3. The method of embodiment 2, further comprising:
   generating, by the server, a second plurality of feature values for the first plurality of features for the prediction of the impact of the updates on the set of performance metrics associated with the first webpage, based on the first set of elements and the historical data associated with the first webpage; and
   providing, by the server, the second plurality of feature values as input to the first ML model, wherein the first impact score is outputted by the first ML model in response to the provided input.
4. The method of embodiment 1, wherein the plurality of deployment strategies corresponds to a plurality of integration/continuous deployment (CI/CD) pipelines and wherein a first CI/CD pipeline of the plurality of CI/CD pipelines is executed for the updating and the deployment of the first webpage.
5. The method of embodiment 1, further comprising:
   receiving, by the server, post the deployment of the updated first webpage, a second set of elements indicative of a second set of updates to be made to the updated first webpage;
   predicting, by the server, based on the second set of elements and using the first ML model, a second impact score indicative of an impact of the second set of updates on the set of performance metrics associated with the first webpage; and
   selecting, by the server, a second deployment strategy from the plurality of pre-defined deployment strategies based on the predicted second impact score and the set of rules, wherein the second deployment strategy is executed for the updating and deployment of the first webpage based on the second set of updates.
6. The method of embodiment 1, further comprising:
   predicting, by the server, based on the first set of elements and using a second ML model, a second impact score indicative of an impact of the first set of updates on a set of conversion metrics associated with the first webpage, wherein the second impact score is predicted prior to the deployment of the updated first webpage, and wherein the first deployment strategy is further based on the predicted second impact score.
7. The method of embodiment 6, further comprising:
   determining, by the server, a second plurality of features for training the second ML model, wherein:
   the second plurality of features include at least two or more of a page type of a webpage, a type of content associated with a webpage, a locale associated with a webpage, an average time taken for a webpage to load on a user device, an average time taken for a webpage to activate interactive features on the webpage post loading;
   determining, by the server, a second plurality of feature values for the second plurality of features based on historical data associated with a plurality of webpages including the first webpage, wherein the historical data includes a deployment history of the plurality of webpages and historical conversion data for each of the plurality of webpages;
   generating, by the server, based on the second plurality of feature values and the historical conversion data, a second training dataset for training the second ML model; and
   training, by the server, using the second training dataset, the second ML model to predict impact of updates on conversion corresponding to a webpage, wherein the trained second ML model is used for the prediction of the second impact score.
8. The method of embodiment 6, further comprising:
   determining, by the server, first and second weighted impact scores based on first and second weights assigned to the first and second impact scores, respectively; and
   determining, by the server, an aggregated impact score based on the first and second weighted impact scores, wherein the selection of the first deployment strategy is based on the aggregated impact score.
9. The method of embodiment 1, wherein the set of performance metrics comprise one or more of: an average time taken for a webpage to load on a user device and an average time taken for a webpage to activate interactive features on the webpage post loading.
10. A system for managing updates to webpages, comprising:
   a processor;
   a memory storing instructions executable by the processor, wherein the processor on execution of the instructions is configured to:
      receive a first set of elements indicative of a first set of updates to be made to a first webpage that is currently deployed, wherein the first set of elements include at least program code for updating the first webpage;
      predict, based on the first set of elements and using a first machine learning (ML) model, a first impact score indicative of an impact of the first set of updates on a set of performance metrics associated with the first webpage, wherein the first impact score is predicted prior to deployment of the updated first webpage; and
      select a first deployment strategy from a plurality of pre-defined deployment strategies based on the predicted first impact score and a set of rules, wherein the first deployment strategy is executed for the updating and deployment of the first webpage based on the first set of updates.
11. The system of embodiment 10, wherein the processor is further configured to:
   determine a first plurality of features for training the first ML model, wherein:
   the first plurality of features include at least two or more of a page type of a webpage, a code structure of a webpage, a count of code snippets associated with a webpage, a locale associated with a webpage, a caching arrangement for loading a webpage, a versioning history of a webpage, a current average time taken for a webpage to load on a user device, a current average time taken for a webpage to activate interactive features on the webpage post loading, a previous average time taken for a webpage to load on a user device, a previous average time taken for a webpage to activate interactive features on the webpage post loading;
   determine a first plurality of feature values for the first plurality of features based on historical data associated with a plurality of webpages including the first webpage, wherein the historical data includes a deployment history of the plurality of webpages and historical performance data for each of the plurality of webpages;
   generate, based on the first plurality of feature values and the historical performance data, a training dataset for training the first ML model; and
   train, using the first training dataset, the first ML model to predict impact of updates on a performance of a webpage, wherein the trained first ML model is used for the prediction of the first impact score.
12. The system of embodiment 11, wherein the processor is further configured to:
   generate a second plurality of feature values for the first plurality of features for the prediction of the impact of the updates on the set of performance metrics associated with the first webpage, based on the first set of elements and the historical data associated with the first webpage; and
   provide the second plurality of feature values as input to the first ML model, wherein the first impact score is outputted by the first ML model in response to the provided input.
13. The system of embodiment 10, wherein the plurality of deployment strategies corresponds to a plurality of integration/continuous deployment (CI/CD) pipelines and wherein a first CI/CD pipeline of the plurality of CI/CD pipelines is executed for the updating and the deployment of the first webpage.
14. The system of embodiment 10, wherein the processor is further configured to:
   receive, post the deployment of the updated first webpage, a second set of elements indicative of a second set of updates to be made to the updated first webpage;
   predict, based on the second set of elements and using the first ML model, a second impact score indicative of an impact of the second set of updates on the set of performance metrics associated with the first webpage; and
   select a second deployment strategy from the plurality of pre-defined deployment strategies based on the predicted second impact score and the set of rules, wherein the second deployment strategy is executed for the updating and deployment of the first webpage based on the second set of updates.
15. The system of embodiment 10, wherein the processor is further configured to:
   predict, based on the first set of elements and using a second ML model, a second impact score indicative of an impact of the first set of updates on a set of conversion metrics associated with the first webpage, wherein the second impact score is predicted prior to the deployment of the updated first webpage, and wherein the first deployment strategy is further based on the predicted second impact score.
16. The system of embodiment 15, wherein the processor is further configured to:
   determine a second plurality of features for training the second ML model, wherein:
   the second plurality of features include at least two or more of a page type of a webpage, a type of content associated with a webpage, a locale associated with a webpage, a positioning of content in a webpage, an average time taken for a webpage to load on a user device, an average time taken for a webpage to activate interactive features on the webpage post loading;
   determine a second plurality of feature values for the second plurality of features based on historical data associated with a plurality of webpages including the first webpage, wherein the historical data includes a deployment history of the plurality of webpages and historical conversion data for each of the plurality of webpages;
   generate, based on the second plurality of feature values and the historical conversion data, a second training dataset for training the second ML model; and
   train, using the second training dataset, the second ML model to predict impact of updates on conversion corresponding to a webpage, wherein the trained second ML model is used for the prediction of the second impact score.
17. The system of embodiment 15, wherein the processor is further configured to:
   determine first and second weighted impact scores based on first and second weights assigned to the first and second impact scores, respectively; and
   determine an aggregated impact score based on the first and second weighted impact scores, wherein the selection of the first deployment strategy is based on the aggregated impact score.
18. The system of embodiment 10, wherein the set of performance metrics comprise one or more of: an average time taken for a webpage to load on a user device and an average time taken for a webpage to activate interactive features on the webpage post loading.
19. A non-transitory computer readable medium having stored thereon, computer executable instructions, which when executed by a computer, cause the computer to execute one or more operations comprising:
   receiving a first set of elements indicative of a first set of updates to be made to a first webpage that is currently deployed, wherein the first set of elements include at least program code for updating the first webpage;
   predicting based on the first set of elements and using a first machine learning (ML) model, a first impact score indicative of an impact of the first set of updates on a set of performance metrics associated with the first webpage, wherein the first impact score is predicted prior to deployment of the updated first webpage; and
   selecting a first deployment strategy from a plurality of pre-defined deployment strategies based on the predicted first impact score and a set of rules, wherein the first deployment strategy is executed for the updating and the deployment of the first webpage based on the first set of updates.
20. The non-transitory computer readable medium of embodiment 19, wherein the plurality of deployment strategies corresponds to a plurality of integration/continuous deployment (CI/CD) pipelines and wherein a first CI/CD pipeline of the plurality of CI/CD pipelines is executed for the updating and the deployment of the first webpage.

## Claims

1. A method for managing updates to webpages, comprising:
receiving, by a server, a first set of elements indicative of a first set of updates to be made to a first webpage that is currently deployed, wherein the first set of elements include at least program code for updating the first webpage;
predicting, by the server, based on the first set of elements and using a first machine learning (ML) model, a first impact score indicative of an impact of the first set of updates on a set of performance metrics associated with the first webpage, wherein the first impact score is predicted prior to deployment of the updated first webpage; and
selecting, by the server, a first deployment strategy from a plurality of pre-defined deployment strategies based on the predicted first impact score and a set of rules, wherein the first deployment strategy is executed for the updating and the deployment of the first webpage based on the first set of updates.

2. The method of claim 1, further comprising:
determining, by the server, a first plurality of features for training the first ML model, wherein:
the first plurality of features include at least two or more of a page type of a webpage, a code structure of a webpage, a count of code snippets associated with a webpage, a locale associated with a webpage, a caching arrangement for loading a webpage, a versioning history of a webpage, a current average time taken for a webpage to load on a user device, a current average time taken for a webpage to activate interactive features on the webpage post loading, a previous average time taken for a webpage to load on a user device, a previous average time taken for a webpage to activate interactive features on the webpage post loading;
determining, by the server, a first plurality of feature values for the first plurality of features based on historical data associated with a plurality of webpages including the first webpage, wherein the historical data includes a deployment history of the plurality of webpages and historical performance data for each of the plurality of webpages;
generating, by the server, based on the first plurality of feature values and the historical performance data, a training dataset for training the first ML model; and
training, by the server, using the first training dataset, the first ML model to predict impact of updates on a performance of a webpage, wherein the trained first ML model is used for the prediction of the first impact score;
optionally wherein the method further comprises:
generating, by the server, a second plurality of feature values for the first plurality of features for the prediction of the impact of the updates on the set of performance metrics associated with the first webpage, based on the first set of elements and the historical data associated with the first webpage; and
providing, by the server, the second plurality of feature values as input to the first ML model, wherein the first impact score is outputted by the first ML model in response to the provided input.

3. The method of claim 1, wherein the plurality of deployment strategies corresponds to a plurality of integration/continuous deployment (CI/CD) pipelines and wherein a first CI/CD pipeline of the plurality of CI/CD pipelines is executed for the updating and the deployment of the first webpage.

4. The method of claim 1, further comprising:
receiving, by the server, post the deployment of the updated first webpage, a second set of elements indicative of a second set of updates to be made to the updated first webpage;
predicting, by the server, based on the second set of elements and using the first ML model, a second impact score indicative of an impact of the second set of updates on the set of performance metrics associated with the first webpage; and
selecting, by the server, a second deployment strategy from the plurality of pre-defined deployment strategies based on the predicted second impact score and the set of rules, wherein the second deployment strategy is executed for the updating and deployment of the first webpage based on the second set of updates.

5. The method of claim 1, further comprising:
predicting, by the server, based on the first set of elements and using a second ML model, a second impact score indicative of an impact of the first set of updates on a set of conversion metrics associated with the first webpage, wherein the second impact score is predicted prior to the deployment of the updated first webpage, and wherein the first deployment strategy is further based on the predicted second impact score;

6. The method of claim 5, further comprising:
(A) determining, by the server, a second plurality of features for training the second ML model, wherein:
the second plurality of features include at least two or more of a page type of a webpage, a type of content associated with a webpage, a locale associated with a webpage, an average time taken for a webpage to load on a user device, an average time taken for a webpage to activate interactive features on the webpage post loading;
determining, by the server, a second plurality of feature values for the second plurality of features based on historical data associated with a plurality of webpages including the first webpage, wherein the historical data includes a deployment history of the plurality of webpages and historical conversion data for each of the plurality of webpages;
generating, by the server, based on the second plurality of feature values and the historical conversion data, a second training dataset for training the second ML model; and
training, by the server, using the second training dataset, the second ML model to predict impact of updates on conversion corresponding to a webpage, wherein the trained second ML model is used for the prediction of the second impact score; or
(B) determining, by the server, first and second weighted impact scores based on first and second weights assigned to the first and second impact scores, respectively; and
determining, by the server, an aggregated impact score based on the first and second weighted impact scores, wherein the selection of the first deployment strategy is based on the aggregated impact score.

7. The method of claim 1, wherein the set of performance metrics comprise one or more of: an average time taken for a webpage to load on a user device and an average time taken for a webpage to activate interactive features on the webpage post loading.

8. A system for managing updates to webpages, comprising:
a processor;
a memory storing instructions executable by the processor, wherein the processor on execution of the instructions is configured to:
receive a first set of elements indicative of a first set of updates to be made to a first webpage that is currently deployed, wherein the first set of elements include at least program code for updating the first webpage;
predict, based on the first set of elements and using a first machine learning (ML) model, a first impact score indicative of an impact of the first set of updates on a set of performance metrics associated with the first webpage, wherein the first impact score is predicted prior to deployment of the updated first webpage; and
select a first deployment strategy from a plurality of pre-defined deployment strategies based on the predicted first impact score and a set of rules, wherein the first deployment strategy is executed for the updating and deployment of the first webpage based on the first set of updates.

9. The system of claim 8, wherein the processor is further configured to:
determine a first plurality of features for training the first ML model, wherein:
the first plurality of features include at least two or more of a page type of a webpage, a code structure of a webpage, a count of code snippets associated with a webpage, a locale associated with a webpage, a caching arrangement for loading a webpage, a versioning history of a webpage, a current average time taken for a webpage to load on a user device, a current average time taken for a webpage to activate interactive features on the webpage post loading, a previous average time taken for a webpage to load on a user device, a previous average time taken for a webpage to activate interactive features on the webpage post loading;
determine a first plurality of feature values for the first plurality of features based on historical data associated with a plurality of webpages including the first webpage, wherein the historical data includes a deployment history of the plurality of webpages and historical performance data for each of the plurality of webpages;
generate, based on the first plurality of feature values and the historical performance data, a training dataset for training the first ML model; and
train, using the first training dataset, the first ML model to predict impact of updates on a performance of a webpage, wherein the trained first ML model is used for the prediction of the first impact score,
optionally wherein the processor is further configured to:
generate a second plurality of feature values for the first plurality of features for the prediction of the impact of the updates on the set of performance metrics associated with the first webpage, based on the first set of elements and the historical data associated with the first webpage; and
provide the second plurality of feature values as input to the first ML model, wherein the first impact score is outputted by the first ML model in response to the provided input.

10. The system of claim 8, wherein the plurality of deployment strategies corresponds to a plurality of integration/continuous deployment (CI/CD) pipelines and wherein a first CI/CD pipeline of the plurality of CI/CD pipelines is executed for the updating and the deployment of the first webpage.

11. The system of claim 8, wherein the processor is further configured to:
receive, post the deployment of the updated first webpage, a second set of elements indicative of a second set of updates to be made to the updated first webpage;
predict, based on the second set of elements and using the first ML model, a second impact score indicative of an impact of the second set of updates on the set of performance metrics associated with the first webpage; and
select a second deployment strategy from the plurality of pre-defined deployment strategies based on the predicted second impact score and the set of rules, wherein the second deployment strategy is executed for the updating and deployment of the first webpage based on the second set of updates.

12. The system of claim 10, wherein the processor is further configured to:
predict, based on the first set of elements and using a second ML model, a second impact score indicative of an impact of the first set of updates on a set of conversion metrics associated with the first webpage, wherein the second impact score is predicted prior to the deployment of the updated first webpage, and wherein the first deployment strategy is further based on the predicted second impact score.

13. The system of claim 12, wherein the processor is further configured to:
(A) determine a second plurality of features for training the second ML model, wherein:
the second plurality of features include at least two or more of a page type of a webpage, a type of content associated with a webpage, a locale associated with a webpage, a positioning of content in a webpage, an average time taken for a webpage to load on a user device, an average time taken for a webpage to activate interactive features on the webpage post loading;
determine a second plurality of feature values for the second plurality of features based on historical data associated with a plurality of webpages including the first webpage, wherein the historical data includes a deployment history of the plurality of webpages and historical conversion data for each of the plurality of webpages;
generate, based on the second plurality of feature values and the historical conversion data, a second training dataset for training the second ML model; and
train, using the second training dataset, the second ML model to predict impact of updates on conversion corresponding to a webpage, wherein the trained second ML model is used for the prediction of the second impact score; or
(B) determine first and second weighted impact scores based on first and second weights assigned to the first and second impact scores, respectively; and
determine an aggregated impact score based on the first and second weighted impact scores, wherein the selection of the first deployment strategy is based on the aggregated impact score.

14. The system of claim 8, wherein the set of performance metrics comprise one or more of: an average time taken for a webpage to load on a user device and an average time taken for a webpage to activate interactive features on the webpage post loading.

15. A non-transitory computer readable medium having stored thereon, computer executable instructions, which when executed by a computer, cause the computer to execute one or more operations comprising:
receiving a first set of elements indicative of a first set of updates to be made to a first webpage that is currently deployed, wherein the first set of elements include at least program code for updating the first webpage;
predicting based on the first set of elements and using a first machine learning (ML) model, a first impact score indicative of an impact of the first set of updates on a set of performance metrics associated with the first webpage, wherein the first impact score is predicted prior to deployment of the updated first webpage; and
selecting a first deployment strategy from a plurality of pre-defined deployment strategies based on the predicted first impact score and a set of rules, wherein the first deployment strategy is executed for the updating and the deployment of the first webpage based on the first set of updates,
optionally wherein the plurality of deployment strategies corresponds to a plurality of integration/continuous deployment (CI/CD) pipelines and wherein a first CI/CD pipeline of the plurality of CI/CD pipelines is executed for the updating and the deployment of the first webpage.
